# EUROPEAN PATENT SPECIFICATION

(11) **EP 2 215 172 B1**
(45) Date of publication and mention of the grant of the patent: **07.11.2012**
(21) Application number: 08857213.6
(22) Date of filing: 24.11.2008
(51) Int. Cl.: C09D 127/12, C08K 3/36, C08K 5/5425, G02B 1/11, G02B 1/10, B82Y 30/00

(54) **LOW REFRACTIVE INDEX COMPOSITION, ABRASION RESISTANT ANTI-REFLECTIVE COATING, AND METHOD FOR FORMING ABRASION RESISTANT ANTI-REFLECTIVE COATING**
ZUSAMMENSETZUNG MIT GERINGEM BRECHUNGSINDEX, ABRIEBFESTE ANTIREFLEKTIVE BESCHICHTUNG UND VERFAHREN ZUR BILDUNG EINER ABRIEBFESTEN ANTIREFLEKTIVEN BESCHICHTUNG
COMPOSITION À FAIBLE INDICE DE RÉFRACTION, REVÊTEMENT ANTIREFLET RÉSISTANT À L'ABRASION, ET PROCÉDÉ DE FORMATION D'UN REVÊTEMENT ANTIREFLET RÉSISTANT À L'ABRASION

(30) Priority: 30.11.2007 US 991294 P
(43) Date of publication of application: 11.08.2010
(73) Proprietor: E. I. du Pont de Nemours and Company, Wilmington, DE 19898 (US)
(72) Inventor: BEKIARIAN, Paul, Gregory, Wilmington Delaware 19810 (US); KOURTAKIS, Kostantinos, Media Pennsylvania 19063 (US)
(74) Representative: Matthews, Derek Peter
(86) International application number: PCT/US2008/084528
(87) International publication number: WO 2009/073441

(56) References cited:
- WO-A-2006/073918
- WO-A-2008/019077
- WO-A-2008/019078
- US-A1- 2006 147 177

## Description

### BACKGROUND OF THE INVENTION

### 1. Field of the Invention.

The present invention relates to the field of low refractive index compositions, abrasion resistant anti-reflective coatings formed from these low refractive index compositions, and methods for forming abrasion-resistant anti-reflective coatings for optical display substrates from these low refractive index compositions. The low refractive index compositions are the reaction product of fluoroelastomer having at least one cure site, multiolefinic crosslinker, free radical polymerization initiator, and nanosilica composite comprising nanosilica particles and hydrosylate and/or condensate of an oxysilane having a carbon-carbon double bond.

### 2. Description of Related Art.

Optical materials are characterized by their refractive index. Whenever light travels from one material to another of different index, some of the light is reflected. Unwanted reflections can be substantially reduced by providing an anti-reflective coating on the surface of an optical article at a specified thickness. For an optical article with refractive index n, in order to reach the maximum effectiveness, the anti-reflective coating should have the optical thickness (the physical thickness multiplied by its own refractive index) about a quarter of the wavelength of the incoming light and have a refractive index of the square root of *n*. Most optical articles have a refractive index ranging from 1.4 to 1.6.

It is known that low refractive index anti-reflective coatings can be prepared from fluorinated polymers. The refractive index of a fluorinated polymer correlates with the amount of fluorine in the polymer. Increasing the fluorine content in the polymer decreases the refractive index of the polymer. Considerable industry attention has been directed towards anti-reflective coatings containing fluorinated polymers.

Fluoropolymers with low crystallinity that are soluble in organic solvents typically form coatings having undesirable mechanical properties, such as poor abrasion resistance and poor interfacial adhesion between the fluoropolymer coating and the underlying optical display substrates such as plastics and glass. Various modifications have been explored in order to improve their abrasion resistance and adhesion to substrates.

There is a continuing need in the industry, in the field of optical displays, for anti-reflective coatings having low visible light reflectivity as well as good adhesion to optical display substrates and good abrasion resistance.

### SUMMARY OF THE INVENTION

The present invention meets these needs by providing low refractive index compositions of utility for forming anti-reflective coatings having low visible light reflectivity and excellent adhesion to optical display substrate films and superior abrasion resistance.

Briefly stated, and in accordance with one aspect of the present invention, there is provided a low refractive index composition comprising the reaction product of: (i) a fluoroelastomer having at least one cure site; (ii) a multiolefinic crosslinker; (iii) a free radical polymerization initiator; (iv) a nanosilica composite comprising: (iv-a) a plurality of nanosilica particles, and (iv-b) at least one of a hydrolysis and condensation product of an oxysilane having a carbon-carbon double bond, wherein the at least one of a hydrolysis and condensation product is formed by contacting, in the presence of an organic acid and a lower alkyl alcohol, the oxysilane with from about 3 to about 9 moles of water per mole of hydrolyzable functional group bonded to the silicon of the oxysilane.

Pursuant to another aspect of the present invention, there is provided an anti-reflective film comprising a substrate having an abrasion resistant anti-reflective coating having a scratched percent of about 10 or less as determined by Method 4 (as taught herein) after abrasion by Method 1 (as taught herein), the abrasion resistant anti-reflective coating comprising the reaction product of: (i) a fluoroelastomer having at least one cure site; (ii) a multiolefinic crosslinker; (iii) a free radical polymerization initiator; and (iv) a nanosilica composite, comprising: (iv-a) a plurality of solid nanosilica particles comprising at least about 10 volume percent of the anti-reflective coating; and (iv-b) at least one of a hydrolysis and condensation product of an oxysilane having a carbon-carbon double bond, and wherein the at least one of a hydrolysis and condensation product is formed by contacting, in the presence of an organic acid and a lower alkyl alcohol, the oxysilane with from about 3 to about 9 moles of water per mole of hydrolyzable functional group bonded to the silicon of the oxysilane; wherein the nanosilica composite is aged for at least about 1 hour at a temperature of at least about 25°C prior to formation of the reaction product.

Pursuant to another aspect of the present invention, there is provided a method for forming an abrasion resistant anti-reflective coating on a substrate, the abrasion resistant anti-reflective coating having a scratched percent of about 10 or less as determined by Method 4 (as taught herein) after abrasion by Method 1 (as taught herein), comprising: (i) combining (i-a) at least one of a hydrolysis and condensation product of an oxysilane having a carbon-carbon double bond, wherein the at least one of a hydrolysis and condensation product is formed by contacting, in the presence of an organic acid and a lower alkyl alcohol, the oxysilane with from about 3 to about 9 moles of water per mole of hydrolyzable functional group bonded to the silicon of the oxysilane, and (i-b) a plurality of solid nanosilica particles to form a nanosilica composite precursor, said plurality of solid nanosilica particles comprising at least about 10 volume percent of the abrasion resistant anti-reflective coating; (ii) ageing the nanosilica composite precursor for at least about 1 hour at a temperature of at least about 25°C to form a nanosilica composite; (iii) combining the nanosilica composite, a fluoroelastomer having at least one cure site, a multiolefinic crosslinker, and a free radical polymerization initiator to form an uncured composition; (iv) applying a coating of the uncured composition on a substrate to form an uncured composition coating on the substrate; and (v) curing the uncured composition coating and thereby forming an abrasion resistant anti-reflective coating on the substrate.

While the present invention will be described in connection with a preferred embodiment thereof, it will be understood that it is not intended to limit the invention to that embodiment. On the contrary, it is intended to cover all alternatives, modifications, and equivalents as may be included within the spirit and scope of the invention as defined by the appended claims.

### DETAILED DESCRIPTION

The present low refractive index composition comprises the reaction product of an uncured composition comprising: (i) a fluoroelastomer having at least one cure site; (ii) a multiolefinic crosslinker; (iii) a free radical polymerization initiator; (iv) a nanosilica composite comprising: (iv-a) a plurality of nanosilica particles, and (iv-b) at least one of a hydrolysis and condensation product of an oxysilane having a carbon-carbon double bond, wherein the at least one of a hydrolysis and condensation product is formed by contacting, in the presence of an organic acid, the oxysilane with from about 3 to about 9 moles of water per mole of hydrolyzable functional group bonded to the silicon of the oxysilane.

Herein the term uncured composition refers to a mixture comprising components that is cured to form the present low refractive index composition. Components of the uncured composition include fluoroelastomer having at least one cure site (herein alternately referred to as "fluoroelastomer"), multiolefinic crosslinker (herein alternately referred to as "crosslinker"), free radical polymerization initiator (herein alternately referred to as "initiator"), and nanosilica composite comprising nanosilica particles (herein alternately referred to as "nanosilica") and at least one of a hydrolysis and condensation product of an oxysilane having a carbon-carbon double bond (herein alternately referred to as "oxysilane hydrosylate and/or condensate"). Uncured composition can further comprise other components such as polar aprotic solvent to facilitate handling and coating.

In one embodiment the present low refractive index composition has a refractive index of from about 1.20 to about 1.49. In one embodiment the present low refractive index composition has a refractive index of from about 1.30 to about 1.44.

One component of the uncured composition is fluoroelastomer having at least one cure site. Example cure sites of utility include bromine, iodine and ethenyl. Fluoroelastomer contains at least about 65 weight% fluorine, preferably at least about 70 weight% fluorine, and is a substantially amorphous copolymer characterized by having carbon-carbon bonds in the copolymer backbone. Fluoroelastomer comprises repeating units arising from two or more types of monomers and has cure sites allowing for crosslinking to form a three dimensional network. A first monomer type gives rise to straight fluoroelastomer chain segments with a tendency to crystallize. A second monomer type having a bulky group is incorporated into the fluoroelastomer chain at intervals to break up such crystallization tendency and produce a substantially amorphous elastomer. Monomers of utility for straight chain segments are those without bulky substituents and include: vinylidene fluoride (VDF), CH₂=CF₂; tetrafluoroethylene (TFE), CF₂=CF₂; chlorotrifluoroethylene (CTFE), CF₂=CFCl; and ethylene (E), CH₂=CH₂. Monomers with bulky groups useful for disrupting crystallinity include hexafluoropropylene (HFP), CF₂=CFCF₃; 1-hydropentafluoropropylene, CHF=CFCF₃; 2-hydropentafluoropropylene, CF₂=CHCF₃; perfluoro(alkyl vinyl ether)s (e.g., perfluoro(methyl vinyl) ether (PMVE), CF₂=CFOCF₃); and propylene (P), CH₂=CHCH₃. Fluoroelastomers are generally described by A. Moore in Fluoroelastomers Handbook: The Definitive User's Guide and Databook, William Andrew Publishing, ISBN 0-8155-1517-0 (2006).

In one embodiment, fluoroelastomers have at least one cure site selected from the group consisting of bromine, iodine (halogen) and ethenyl. The cure sites can be located on, or on groups attached to, the fluoroelastomer backbone and in this instance arise from including cure site monomers in the polymerization to make the fluoroelastomer. Halogenated cure sites can also be located at fluoroelastomer chain ends and in this instance arise from the use of halogenated chain transfer agents in the polymerization to make the fluoroelastomer. The fluoroelastomer containing cure sites is subjected to reactive conditions, also referred to as curing (e.g., thermal or photochemical curing), that results in the formation of covalent bonds (i.e., crosslinks) between the fluoroelastomer and other components in the uncured composition. Cure site monomers leading to the formation of cure sites located on, or on groups attached to, the fluoroelastomer backbone generally include brominated alkenes and brominated unsaturated ethers (resulting in a bromine cure site), iodinated alkenes and iodinated unsaturated ethers (resulting in an iodine cure site), and dienes containing at least one ethenyl functional group that it is not in conjugation with other carbon-carbon unsaturation or carbon-oxygen unsaturation (resulting in an ethenyl cure site). Additionally, or alternatively, iodine atoms, bromine atoms or mixtures thereof can be present at the fluoroelastomer backbone chain ends as a result of the use of chain transfer agent during polymerization to make the fluoroelastomer. Fluoroelastomers of utility generally contain from about 0.25 weight% to about 1 weight% of cure site, preferably about 0.35 weight% of cure site, based on the weight of monomers comprising the fluoroelastomer.

Fluoroelastomer containing bromine cure sites can be obtained by copolymerizing brominated cure site monomers into the fluoroelastomer during polymerization to form the fluoroelastomer. Brominated cure site monomers have carbon-carbon unsaturation with bromine attached to the double bond or elsewhere in the molecule and can contain other elements including H, F and O. Example brominated cure site monomers include bromotrifluoroethylene, vinyl bromide, 1- bromo-2,2-difluoroethylene, perfluoroallyl bromide, 4-bromo-1,1,2-trifluorobutene, 4-bromo-3,3,4,4-tetrafluoro-1-butene, 4-bromo-1,1,3,3,4,4,-hexafluorobutene, 4-bromo-3-chloro-1,1,3,4,4-pentafluorobutene, 6-bromo-5,5,6,6-tetrafluorohexene, 4-bromoperfluoro-1-butene, and 3,3-difluoroallyl bromide. Further examples include brominated unsaturated ethers such as 2-bromo-perfluoroethyl perfluorovinyl ether and fluorinated compounds of the class BrCF₂(perfluoroalkylene)OCF=CF₂, such as CF₂BrCF₂OCF=CF₂, and fluorovinyl ethers of the class ROCF=CFBr and ROCBr=CF₂, where R is a lower alkyl group or fluoroalkyl group, such as CH₃OCF=CFBr and CF₃CH₂OCF=CFBr.

Fluoroelastomer containing iodine cure sites can be obtained by copolymerizing iodinated cure site monomers into the fluoroelastomer during polymerization to form the fluoroelastomer. Iodinated cure site monomers have carbon-carbon unsaturation with iodine attached to the double bond or elsewhere in the molecule and can contain other elements including H, Br, F and O. Example iodinated cure site monomers include iodoethylene, iodotrifluoroethylene, 4-iodo-3,3,4,4-tetrafluoro-1-butene, 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,2,2-tetrafluoroethylene, 1,1,2,3,3,3-hexafluoro-2- iodo-1-(perfluorovinyloxy)propane, 2-iodoethyl vinyl ether, and 3,3,4,5,5,5-hexafluoro-4-iodopentene. Further examples include olefins of the formula CHR=CHZCH₂CHRI, wherein each R is independently H or CH₃, and Z is a C₁-C₁₈ (per)fluoroalkylene radical, linear or branched, optionally containing one or more ether oxygen atoms, or a (per)fluoropolyoxyalkylene radical. Further examples of iodinated cure site monomers of utility are unsaturated ethers of the formula I(CH₂CF₂CF₂)ₙOCF=CF₂ and ICH₂CF₂O[CF(CF₃)CF₂O]ₙCF=CF₂, wherein n=1-3.

Fluoroelastomer containing ethenyl cure sites is obtained by copolymerizing ethenyl-containing cure site monomers into the fluoroelastomer during polymerization to form the fluoroelastomer. Ethenyl cure site monomers have carbon-carbon unsaturation with ethenyl functionality that it is not in conjugation with other carbon-carbon or carbon-oxygen unsaturation. Thus, ethenyl cure sites can arise from nonconjugated dienes having at least two points of carbon-carbon unsaturation and optionally containing other elements including H, Br, F and O. One point of carbon-carbon unsaturation is incorporated (i.e., polymerizes) into the fluoroelastomer backbone, the other is pendant to the fluoroelastomer backbone and is available for reactive curing (i.e., crosslinking). Example ethenyl cure site monomers include nonconjugated dienes and trienes such as 1,4-pentadiene, 1,5-hexadiene, 1,7-octadiene, and 8-methyl-4-ethylidene-1,7-octadiene.

Preferred amongst the cure site monomers are bromotrifluoroethylene, 4-bromo-3,3,4,4-tetrafluoro-1-butene and 4-iodo-3,3,4,4-tetrafluoro-1-butene-1.

In one embodiment, halogen cure sites can be present at fluoroelastomer backbone chain ends as the result of the use of bromine and/or iodine (halogenated) chain transfer agents during polymerization of the fluoroelastomer. Such chain transfer agents include halogenated compounds that result in bound halogen at one or both ends of the polymer chains. Example chain transfer agents of utility include methylene iodide, 1,4-diiodoperfluoro-n-butane, 1,6-diiodo-3,3,4,4-tetrafluorohexane, 1,3-diiodoperfluoropropane, 1,6-diiodoperfluoro-n-hexane, 1,3-diiodo-2-chloroperfluoropropane, 1,2-di(iododifluoromethyl)perfluorocyclobutane, monoiodoperfluoroethane, monoiodoperfluorobutane, 2-iodo-1-hydroperfluoroethane, 1-bromo-2-iodoperfluoroethane, 1-bromo-3-iodoperfluoropropane, and 1-iodo-2-bromo-1,1-difluoroethane. Preferred are chain transfer agents containing both iodine and bromine.

Fluoroelastomers containing cure sites can be prepared by polymerization of the appropriate monomer mixtures with the aid of a free radical initiator either in bulk, in solution in an inert solvent, in aqueous emulsion or in aqueous suspension. The polymerizations may be carried out in continuous, batch, or in semi-batch processes. General polymerization processes of utility are discussed in the aforementioned Moore Fluoroelastomers Handbook. General fluoroelastomer preparative processes are disclosed in U.S. patent numbers: 4,281,092; 3,682,872; 4,035,565; 5,824,755; 5,789,509; 3,051,677; and 2,968,649.

Examples of fluoroelastomers containing cure sites include: copolymers of cure site monomer, vinylidene fluoride, hexafluoropropylene and, optionally, tetrafluoroethylene; copolymers of cure site monomer, vinylidene fluoride, hexafluoropropylene, tetrafluoroethylene and chlorotrifluoroethylene; copolymers of cure site monomer, vinylidene fluoride, perfluoro(alkyl vinyl ether) and, optionally, tetrafluoroethylene; copolymers of cure site monomer, tetrafluoroethylene, propylene and, optionally, vinylidene fluoride; and copolymers of cure site monomer, tetrafluoroethylene and perfluoro(alkyl vinyl ether), preferably perfluoro(methyl vinyl ether). Fluoroelastomers containing polymerized units arising from vinylidene fluoride are preferred. In one embodiment, fluoroelastomer comprises copolymerized units of cure site monomer, vinylidene fluoride, hexafluoropropylene, and tetrafluoroethylene.

Fluoroelastomers comprising ethylene, tetrafluoroethylene, perfluoro(alkyl vinyl ether) and a bromine-containing cure site monomer, such as those disclosed by Moore, in U.S. Patent 4,694,045, are of utility in present low refractive index compositions. Also of utility are the Viton® GF-series fluoroelastomers, for example Viton® GF-200S, available from DuPont Performance Elastomers, DE, USA.

Another component of the uncured composition is at least one multiolefinic crosslinker. By "multiolefinic" it is meant that it contains at least two carbon-carbon double bonds that are not in conjugation with one another.

Multiolefinic crosslinker is present in the uncured composition in an amount of from about 1 to about 25 parts by weight per 100 parts by weight fluoroelastomer containing cure sites (phr), preferably from about 5 to about 15 phr. Multiolefinic crosslinkers of utility include those containing acrylic (e.g., acryloyloxy, methacryloyloxy) and allylic functional groups.

Acrylic multiolefinic crosslinkers include those represented by the formula R(OC(=O)CR'=CH₂)ₙ, wherein: R is linear or branched alkylene, linear or branched oxyalkylene, aromatic, aromatic ether, or heterocyclic; R' is H or CH₃; and n is an integer from 2 to 8. Representative polyols from which acrylic multiolefinic crosslinkers can be prepared include: ethylene glycol, propylene glycol, triethylene glycol, trimethylolpropane, tris-(2-hydroxyethyl) isocyanurate, pentaerythritol, ditrimethylolpropane and dipentaerythritol. Representative acrylic multiolefinic crosslinkers include 1,3-butylene glycol di(meth)acrylate, 1,6-hexanediol di(meth)acrylate, neopentyl glycol di(meth)acrylate, polyethylene glycol di(meth)acrylate, polypropylene glycol di(meth)acrylate, ethoxylated bisphenol-A di(meth)acrylate, propoxylated bisphenol-A di(meth)acrylate, alkoxylated cyclohexane dimethanol di(meth)acrylate, cyclohexane dimethanol di(meth)acrylate, trimethylolpropane tri(meth)acrylate, ethoxylated trimethylolpropane tri(meth)acrylate, propoxylated trimethylolpropane tri(meth)acrylate, bistrimethylolpropane tetra(meth)acrylate, tris(2-hydroxyethyl)isocyanurate tri(meth)acrylate, pentaerythritol tri(meth)acrylate, pentaerythritol tetra(meth)acrylate, ethoxylated glycerol tri(meth)acrylate, propoxylated glycerol tri(meth)acrylate, pentaerythritol tetra(meth)acrylate, ethoxylated pentaerythritol tetra(meth)acrylate, propoxylated pentaerythritol tetra(meth)acrylate, dipentaerythritol penta(meth)acrylate, dipentaerythritol hexa(meth)acrylate, and combinations thereof. Herein, the designation "(meth)acrylate" is meant to encompass both acrylate and methacrylate.

Allylic multiolefinic crosslinkers include those represented by the formula R(CH₂CR'=CH₂)", wherein R is linear or branched alkylene, linear or branched oxyalkylene, aromatic, aromatic ether, aromatic ester or heterocyclic; R' is H or CH₃; and n is an integer from 2 to 6. Representative allylic multiolefinic crosslinkers include 1,3,5-triallyl isocyanurate, 1,3,5-triallyl cyanurate, and triallyl benzene-1,3,5-tricarboxylate.

Uncured compositions are cured to form the present low refractive index compositions. The uncured compositions are preferably cured via a free radical initiation mechanism. Free radicals may be generated by several known methods such as by the thermal decomposition of organic peroxides, azo compounds, persulfates, redox initiators, and combinations thereof, optionally included in the uncured composition, or by radiation such as ultraviolet (UV) radiation, gamma radiation, or electron beam radiation. The uncured compositions are preferably cured via irradiation with UV radiation.

Another component of the uncured composition is at least one free radical polymerization initiator.

In the embodiment where UV radiation initiation is used to cure the uncured composition, the uncured composition includes generally between 1 and 10 phr, preferably between 5 and 10 phr, of photoinitiator. Photoinitiators can be used singly or in combinations of two or more. Free-radical photoinitiators of utility include those generally useful to UV cure acrylate polymers. Example photoinitiators of utility include benzophenone and its derivatives; benzoin, alpha-methylbenzoin, alpha-phenylbenzoin, alpha-allylbenzoin, alpha-benzylbenzoin; benzoin ethers such as benzil dimethyl ketal (commercially available as Irgacure® 651 (Irgacure® products available from Ciba Specialty Chemicals Corporation, Tarrytown, NY, USA)), benzoin methyl ether, benzoin ethyl ether, benzoin n-butyl ether; acetophenone and its derivatives such as 2-hydroxy-2-methyl-1-phenyl-1-propanone (commercially available as Darocur® 1173 (Darocur ® products available from Ciba Specialty Chemicals Corporation, Tarrytown, NY, USA)) and 1-hydroxycyclohexyl phenyl ketone (commercially available as Irgacure® 184); 2-methyl-1-[4-methylthio)phenyl]-2-(4-morpholinyl)-1-propanone (commercially available as Irgacure® 907); alkyl benzoyl formates such as methylbenzoylformate (commercially available as Darocur® MBF); 2-benzyl-2-(dimethylamino)-1-[4-(4-morpholinyl)phenyl]-1-butanone (commercially available as Irgacure® 369); aromatic ketones such as benzophenone and its derivatives and anthraquinone and its derivatives; onium salts such as diazonium salts, iodonium salts, sulfonium salts; titanium complexes such as, for example, that which is commercially available as "CGI 784 DC", also from Ciba Specialty Chemicals Corporation; halomethylnitrobenzenes; and mono- and bis-acylphosphines such as those available from Ciba Specialty Chemicals Corporation under the trade designations Irgacure® 1700, Irgacure® 1800, Irgacure® 1850, Irgacure® 819, Irgacure® 2005, Irgacure® 2010, Irgacure® 2020 and Darocur® 4265. Further, sensitizers such as 2- and 4-isopropyl thioxanthone, commercially available from Ciba Specialty Chemicals Corporation as Darocur® ITX, may be used in conjunction with the aforementioned photoinitiators.

Photoinitiators are typically activated by incident light having a wavelength between about 254 nm and about 450 nm. In one embodiment, the uncured composition is cured by light from a high pressure mercury lamp having strong emissions around wavelengths 260 nm, 320 nm, 370 nm and 430 nm. In this embodiment, of utility is a combination of at least one photoinitiator with relatively strong absorption at shorter wavelengths (i.e., 245-350 nm), and at least one photoinitiator with relatively strong absorption at longer wavelengths (i.e., 350-450 nm) to cure the present uncured compositions. Such a mixture of initiators results in the most efficient usage of energy emanating from the UV light source. Examples of photoinitiators with relatively strong absorption at shorter wavelengths include benzil dimethyl ketal (Irgacure® 651) and methylbenzoyl formate (Darocur® MBF). Examples of photoinitiators with relatively strong absorption at longer wavelengths include 2- and 4-isopropyl thioxanthone (Darocur® ITX). An example such mixture of photoinitiators is 10 parts by weight of a 2:1 weight ratio mixture of Irgacure® 651 and Darocur® MBF, to 1 part by weight of Darocur® ITX.

Thermal initiators may also be used together with photoinitiator when UV curing. Useful thermal initiators include, for example, azo, peroxide, persulfate and redox initiators.

UV curing of present uncured compositions can be carried out in the substantial absence of oxygen, which can negatively influence the performance of certain UV photoinitiators. To exclude oxygen, UV curing can be carried out under an atmosphere of inert gas such as nitrogen.

UV curing of present uncured compositions can be carried out at ambient temperature. An elevated temperature of from about 60°C to about 85°C is of utility, and preferred is a temperature of about 75°C. Carrying out UV curing at an elevated temperature results in a more complete cure.

When thermal decomposition of organic peroxide is used to generate free radicals for curing the uncured composition, the uncured composition generally includes between 1 and 10 phr, preferably between 5 and 10 phr of organic peroxide. Useful free-radical thermal initiators include, for example, azo, peroxide, persulfate, and redox initiators, and combinations thereof. Organic peroxides are preferred, and example organic peroxides include: 1,1-bis(t-butylperoxy)-3,5,5-trimethylcyclohexane; 1,1-bis(t-butylperoxy)cyclohexane; 2,2-bis(t-butylperoxy)octane; n-butyl-4, 4-bis(t-butylperoxy)valerate; 2,2-bis(t-butylperoxy)butane; 2,5-dimethylhexane-2,5-dihydroxyperoxide; di-t-butyl peroxide; t-butylcumyl peroxide; dicumyl peroxide; alpha,alpha'-bis(t-butylperoxy-m-isopropyl)benzene; 2,5-dimethyl-2,5-di(t-butylperoxy)hexane; 2,5-dimethyl-2,5-di(t-butylperoxy)hexene-3; benzoyl peroxide; t-butylperoxybenzene; 2,5-dimethyl-2,5-di(benzoylperoxy)-hexane; t-butylperoxymaleic acid; and t-butylperoxyisopropylcarbonate. Benzoyl peroxide is a preferred organic peroxide. Organic peroxides may be used singly or in combinations of two or more.

Another component of the uncured composition is a nanosilica composite.

One component used to form the nanosilica composite is at least one of a hydrolysis and condensation product of an oxysilane having a carbon-carbon double bond. Oxysilane hydrosylates and/or condensates of utility in forming the nanosilica composite are obtained from oxysilanes that comprise: i) a carbon-carbon double bond containing functional group, ii) an oxysilane functional group, and iii) a divalent organic radical connecting the carbon-carbon double bond containing functional group and the oxysilane functional group. Oxysilane can be represented by the formula X-Y-SiR¹R²R³. X represents a carbon-carbon double bond containing functional group such as ethenyl (CH₂=CH-), acryloyloxy (CH₂=CHC(=O)O-), and methacryloyloxy (CH₂=C(CH₃)C(=O)O-) . Y represents a divalent organic radical covalently bonded to the carbon-carbon double bond containing functional group and the oxysilane functional group. Examples of Y radicals include substituted and unsubstituted alkylene groups having 1 to 10 carbon atoms, and substituted or unsubstituted arylene groups having 6 to 20 carbon atoms. The alkylene and arylene groups optionally additionally have ether, ester, and amide linkages therein. Further substituents include halogen, mercapto, carboxyl, alkyl and aryl. SiR¹R²R³ represents an oxysilane functional group containing three substituents (R¹⁻³), one, two or three of which are capable of being displaced by (e.g., nucleophilic) substitution. For example, at least one of the R¹⁻³ substituents are groups such as alkoxy, aryloxy or halogen and the substituting group comprises a group such as hydroxyl present on water, an oxysilane hydrolysis or condensation product, or equivalent reactive functional group present on the substrate film surface. Representative oxysilane functional group substitution includes where R¹ is C₁-C₂₀ alkoxy, C₆-C₂₀ aryloxy, or halogen, and R² and R³ are independently selected from C₁-C₂₀ alkoxy, C₆-C₂₀ aryloxy, C₁-C₂₀ alkyl, C₆-C₂₀ aryl, C₇-C₃₀ aralkyl, C₇-C₃₀ alkaryl, halogen, and hydrogen. R¹ is preferably C₁-C₄ alkoxy, C₆-C₁₀ aryloxy or halogen . Example oxysilanes include: allyltrimethoxysilane, acryloxypropyltrimethoxysilane (APTMS, H₂C=CHCO₂(CH₂)₃Si(OCH₃)₃), acryloxypropyltriethoxysilane, acryloxypropylmethyldimethoxysilane, methacryloxypropyltrimethoxysilane, methacryloxypropyltriethoxysilane, and methacryloxypropylmethyldimethoxysilane. Preferred amongst the oxysilanes is APTMS.

At least one of a hydrolysis and condensation product of the oxysilane is used to form the nanosilica composite. By oxysilane hydrolysis product is meant an oxysilane in which at least one of the R¹⁻³ substituents has been replaced by hydroxyl. For example, X-Y-SiR₂OH, X-Y-SiR(OH)₂, and X-Y-Si(OH)₃. By oxysilane condensation product is meant a product formed by condensation reaction of one or more oxysilane and/or oxysilane hydrolysis products. For example, condensation products include: X-Y-Si(R¹)(R²)OSi(R¹)(OH)-Y-X; X-Y-Si(R¹)(OH)OSi(R¹)(OH)-Y-X; X-Y-Si(OH)₂OSi(R¹)(OH)-Y-X; X-Y-Si(R¹)(OH)OSi(R¹)(OSi(R¹)(OH)-Y-X)-Y-X; and X-Y-Si(R¹)(R²)OSi(R¹)(OSi(R¹)(OH)-Y-X)-Y-X.

Oxysilane hydrosylate and/or condensate is formed by contacting the oxysilane with from about 3 to about 9 moles of water per mole of hydrolyzable functional group bonded to the silicon of the oxysilane. The hydrolysis of the oxysilane is considered complete after 24hr at 25° C because less than 1wt % APTMS residual occurs after hydrolysis. In a preferred embodiment, oxysilane hydrosylate and/or condensate is formed by contacting the oxysilane with from about 4 to about 9 moles of water per mole of hydrolyzable functional group bonded to the silicon of the oxysilane. In a more preferred embodiment, oxysilane hydrosylate and/or condensate is formed by contacting the oxysilane with from about 5 to about 7 moles of water per mole of hydrolyzable functional group bonded to the silicon of the oxysilane. Abrasion resistance of less than 10% scratch at 200g weight occurs, particularly where the amount of water is from 5-9 moles after 24 hours at 25 °C (provided the appropriate amount of hydrolyzed silane and nanosilica are used.) The carbon-carbon double bond containing functional group attached to the oxysilane functional group are unaffected by conditions used to form the oxysilane hydrosylate and/or condensate.

The oxysilane hydrosylate and/or condensate is formed by contacting the oxysilane with water in the presence of a lower alkyl alcohol solvent. Representative lower alkyl alcohol solvents include aliphatic and alicyclic C₁-C₅ alcohols such as methanol, ethanol, n-propanol, isopropanol and cyclopentanol. Preferred of the lower alkyl alcohol solvents is ethanol.

The oxysilane hydrosylate and/or condensate is formed by contacting the oxysilane with water in the presence of an organic acid that catalyzes hydrolysis of one, two or three of the oxysilane substituents R¹⁻³, and further may catalyze condensation of the resultant oxysilane hydrosylates. The organic acids catalyze hydrolysis of oxysilane substituents such as alkoxy and aryloxy, and result in the formation of hydroxyl (silanol) groups in their place. Organic acids comprise the elements carbon, oxygen and hydrogen, optionally nitrogen and sulfur, and contain at least one labile (acidic) proton. Example organic acids include carboxylic acids such as acetic acid, maleic acid, oxalic acid, and formic acid, as well as sulfonic acids such as methanesulfonic acid and toluene sulfonic acid. In one embodiment, the organic acids have a pKa of at least about 4.7. A preferred organic acid is acetic acid.

In one embodiment, a concentration of from about 0.1 weight% to about 1 weight% organic acid in lower alkyl alcohol solvent is of utility for forming the oxysilane hydrosylate and/or condensate from the oxysilane. In one embodiment, a concentration of about 0.4 weight% organic acid in lower alkyl alcohol solvent is of utility for forming the oxysilane hydrosylate and/or condensate from the oxysilane.

The conditions taught herein for the reaction of oxysilane and water in the presence of organic acid and lower alkyl alcohol result in less than about 1 mol% of unhydrolyzed oxysilane (X-Y-SiR¹R²R³) remaining in the formed oxysilane hydrosylate and/or condensate.

Another component used to form the nanosilica composite is a plurality of solid and/or porous nanosilica particles

Solid nanosilica particles of utility can be any shape, including spherical and oblong, and are relatively uniform in size and remain substantially non-aggregated. In one embodiment, the solid nanosilica particles have a median particle diameter d₅₀ of from about 1 nm to about 90 nm. In one embodiment, the solid nanosilica particles have a d₅₀ of from about 5 nm to about 60 nm. In one embodiment, the solid nanosilica particles have a d₅₀ of from about 15 nm to about 30 nm. In one embodiment where solid nanosilica particles are used in the absence of porous nanosilica particles, the solid nanosilica particles have a d₅₀ of about 30 nm and less. In one embodiment where solid nanosilica particles are used together with porous nanosilica particles, the solid nanosilica particles have a d₅₀ of from about 1 nm to about 50 nm. The median particle diameter (d₅₀) is the diameter for which half the volume or mass of the particle population is composed of particles having a diameter smaller than this value, and half the volume or mass of the particle population is composed of particles having a diameter larger than this value.

Aggregation of the solid nanosilica particles undesirably results in precipitation, gelation, and a dramatic increase in sol viscosity that may make uniform coatings of the uncured composition difficult to achieve. Solid nanosilica particles may aggregate to form aggregate particles in the colloid, wherein each of the aggregate particles comprises a plurality of smaller sized solid nanoparticles. The average aggregate solid nanosilica particle diameter in the colloid is desirably less than about 90 nm before coating.

Solid nanosilica particles of utility for forming the nanosilica composite are produced from sols of silicon oxides (e.g., colloidal dispersions of solid silicon nanoparticles in liquid media), especially sols of amorphous, semi-crystalline, and/or crystalline silica. Such sols can be prepared by a variety of techniques and in a variety of forms, which include hydrosols (where water serves as the liquid medium), organosols (where organic liquids serve as the liquid medium), and mixed sols (where the liquid medium comprises both water and an organic liquid). See, e.g., the descriptions of the techniques and forms given in U.S. Patent Numbers: 2,801,185; 4,522,958; and 5,648,407. Where the solid nanosilica sol is produced in aprotic solvent (e.g., water, alcohol) in which the other uncured composition components (e.g., fluoroelastomer) are not soluble, it is preferable to replace at least about 90 volume percent, more preferably at least about 97 volume percent, of such protic solvent with a solvent in which the other uncured composition components are soluble before the sol is used in formation of the nanosilica composite. Methods for such solvent replacement are known, for example, distillation under reduced pressure. Solid nanosilica particles can be commercially obtained as colloidal dispersions or sols dispersed in polar aprotic solvents in which the other uncured composition components are soluble, for example Nissan MEK-ST, a solid silica colloid in methyl ethyl ketone containing about 0.5 weight percent water, median nanosilica particle diameter d₅₀ of about 16 nm, 30-31 wt% silica, available from Nissan Chemicals America Corporation, Houston, TX, USA.

In one embodiment, porous nanosilica particles are used together with solid nanosilica particles to further reduce the refractive index of the present low refractive index composition. Of utility are porous nanosilica particles having refractive index of from about 1.15 to about 1.40, preferably from about 1.20 to about 1.35, having a median particle diameter d₅₀ of from about 5 nm to about 90 nm, preferably from about 5 nm to about 70 nm. As used in this context, refractive index refers to the refractive index of the particle as a whole. Porous nanosilica particles can have pores of any shape, provided that such pores are not of a dimension that allows higher refractive index components present in the uncured composition to enter the pores. One example is where the pore comprises a void of lower density and low refractive index (e.g., a void containing air) formed within a shell of silicon oxide (e.g., a hollow nanosilica particle). The thickness of the shell affects the strength of the nanoparticles. If the hollow silica particle is rendered to have reduced refractive index and increased porosity, the thickness of the shell decreases and results in a decrease in the strength (fracture resistance) of the nanoparticles. Hollow nanosilica particles having a refractive index lower than about 1.15 are undesirable, as such particles will have unacceptable strength. Assuming that the radius of the void inside the particle is x and the radius of the outer shell of the particle is y, the porosity (P) as represented by the formula P = (4πx³/3)/(4πy³/3)×100 is generally from about 10 to about 60%, and preferably from about 20 to about 60%.

Methods for producing such hollow nanosilica particles are known, for example, as described in JP-A-2001/233611 and JP-A-2002/79616.

The amount of solid nanosilica in the uncured composition can range from about 1 volume% to about 45 volume%, preferably from about 1 volume% to about 30 volume%. The amount of porous nanosilica in the uncured composition can range from about 1 volume% to about 60 volume%. In the embodiment where the uncured composition is used to form an abrasion resistant anti-reflective coating, the total volume percent of solid and porous nanosilica is at least about 10 volume%, preferably from about 15 to about 35 volume%, more preferably about 25 volume%. This results in a cured abrasion resistant anti-reflective coating having a scratched percent of about 10 or less as determined by Method 4 after abrasion by Method 1. The volume percent of nanosilica particles is herein defined as 100 times the quotient of the volume of dry nanosilica particles divided by the sum of the volumes of dry fluoroelastomer having cure sites, multiolefinic crosslinker and nanosilica particles. In the embodiment where the uncured composition additionally comprises components that remain in the low refractive index composition after curing, the sum in the denominator additionally includes the volume of such dry components.

In one embodiment solid nanosilica particles and porous nanosilica particles are used together in forming in the nanosilica composite. This results in anti-reflective coatings having lower Rᵥᵢₛ than those in which solid nanosilica particles are used alone. Solid nanosilica particles and porous nanosilica particles can be used together in any proportion within the aforementioned volume% and median particle diameter ranges. Generally an about 1:10 to about 10:1 ratio of volume% solid nanosilica particles to volume% porous nanosilica particles is of utility.

In one embodiment, solid nanosilica particles have at least about 50% but less than 100% of the reactive silanols functionalized with an unreactive substituent. In one embodiment, the solid nanosilica particles have at least about 60% but less than 100% of the reactive silanols functionalized with an unreactive substituent. In one embodiment, the solid nanosilica particles have at least about 75% but less than 100% of the reactive silanols functionalized with an unreactive substituent. In one embodiment, the solid nanosilica particles have at least about 90% but less than 100% of the reactive silanols functionalized with an unreactive substituent. By reactive silanols is meant silanols on the surface of the nanosilica particles prior to functionalization that are available to react as nucleophiles. By functionalized with an unreactive substituent is meant that such functionalized silanols are bonded to substituents that do not allow reaction of the functionalized silanols with any component of the uncured composition. By unreactive substituent is meant a substituent that is not reactive towards any component of the uncured composition. Unreactive substituents of utility include trialkylsilyl, for example, trimethylsilyl.

Characterization of the extent to which solid nanosilica reactive silanols are substituted with unreactive substituents can be carried out by known methods. For example, the use of gas phase titration of the nanosilica using pyridine as a probe with monitoring by DRIFTS (diffuse reflectance infrared Fourier transform spectroscopy) allows for the characterization of the extent to which the solid nanosilica particle reactive silanols are substituted with unreactive substituents.

In one embodiment, the relative amount of oxysilane, from which is formed the present oxysilane hydrosylate and/or condensate, and solid nanosilica particles of utility for forming the nanosilica composite is from about 0.8 g to about 110 g, preferably from about 4 g to about 77 g, more preferably from about 7 g to about 77 g, of oxysilane on average per 100 g of solid nanosilica particles of colloidal nanosilica.

In another embodiment, the relative amount of oxysilane, from which is formed the present oxysilane hydrosylate and/or condensate, and porous nanosilica particles of utility for forming the nanosilica composite is from about 0.8 g to about 120 g, preferably from about 4 g to about 60 g, more preferably from about 6 g to about 48 g, of oxysilane on average per 100 g of porous nanosilica particles of colloidal nanosilica. In another embodiment, a range of about 18 g to about 40 g oxysilane per 100 g nano-silica (whether solid or hollow or a blend of the two) yields a desired abrasion resistant coating result of less than 10 % scratch at 200 g weight, determined my Method 4 (as taught herein) after abrasion by Method 1 (as taught herein).

Nanosilica is combined with oxysilane hydrosylate and/or condensate to form a nanosilica composite precursor. The nanosilica composite precursor is allowed to age at room or elevated temperature. Nanosilica sol is combined with an oxysilane hydrosylate and/or condensate to form a nanosilica composite precursor which is allowed to age at about 25°C for at least about 1 hour to form the nanosilica composite which provides an abrasion resistance of less than 10% scratch at 200g weight, determined my Method 4 (as taught herein) after abrasion by Method 1 (as taught herein) (provided the appropriate amount of APTMS-H and nanosilica are used). In one embodiment, a nanosilica sol can be combined with an oxysilane hydrosylate and/or condensate to form a nanosilica composite precursor which is allowed to age at about 25°C from about 20 hours to about 7 days (168 hours) to form the nanosilica composite. Ageing results in a cured abrasion resistant anti-reflective coating that has higher abrasion resistance than a like coating for which the nanosilica composite precursor is not aged. In one embodiment the nanosilica composite precursor is aged at an elevated temperature. For example, at a temperature of up to about 50°C. In this embodiment, the ageing period can be shorter than the aforementioned, for example from about 1 to 24 hours which would provide an abrasion resistance of less than 10% scratch at 200g weight, determined my Method 4 (as taught herein) after abrasion by Method 1 (as taught herein) (provided the appropriate amount of APTMS-H and nanosilica are used).

In one embodiment where solid and porous nanosilica are used together in a nanosilica composite, nanosilica composite precursors of each with oxysilane hydrosylate and/or condensate can be formed separately and allowed to age separately. In one embodiment where solid and porous nanosilica are used together in a nanosilica composite, a nanosilica composite precursor comprising both solid and porous nanosilica and oxysilane hydrosylate and/or condensate can be formed and allowed to age. In each such embodiment, the nanosilica composite precursor can be allowed to age at room temperature or at an elevated temperature prior to combination with other components to form the uncured composition.

Carbon-carbon double bond containing functional groups on oxysilane hydrosylates and/or condensates do not react with other components of the uncured composition under ambient conditions. However, when the uncured composition is exposed to energy (e.g., heat, light) or chemical treatment (e.g., peroxide free radical polymerization initiators), the carbon-carbon double bonds can react with other components of the uncured composition, for example, the fluoroelastomer cure site, the multiolefinic crosslinker, the photoinitiator, as well as functionality present on the surface of a substrate film on which the uncured composition is coated. The present nanosilica composite can be combined with other uncured composition reactive components without undesirably causing the uncured composition reactive components to react (crosslink) prior to curing.

Uncured compositions of utility in forming low refractive index compositions according to the present invention optionally contain unreactive components such as solvent that facilitates coating as well as handling and transfer. Thus, the present invention further includes a liquid mixture for forming a low refractive index composition for use in forming an anti-reflection coating, the liquid mixture comprising a solvent having dissolved or dispersed therein: (i) a fluoroelastomer having at least one cure site; (ii) a multiolefinic crosslinker; (iii) a free radical polymerization initiator; (iv) a nanosilica composite comprising: (iv-a) a plurality of nanosilica particles, and (iv-b) at least one of a hydrolysis and condensation product of an oxysilane having a carbon-carbon double bond, wherein the at least one of a hydrolysis and condensation product is formed by contacting, in the presence of an organic acid, the oxysilane with from about 3 to about 9 moles of water per mole of hydrolyzable functional group bonded to the silicon of the oxysilane.

Solvent is preferably included in the uncured composition to reduce the viscosity of the uncured composition in order to facilitate coating. The appropriate viscosity level of uncured composition containing solvent depends upon various factors such as the desired thickness of the anti-reflective coating, technique of application of the uncured composition to the substrate, and the substrate onto which the uncured composition is to be applied, and can be determined by one of ordinary skill in this field without undue experimentation. Generally, the amount of solvent in the uncured composition is about 85 weight% to about 97 weight%.

Solvent is selected such that it does not adversely affect the curing properties of the uncured composition or attack the optical display substrate. Additionally, solvent is chosen such that the addition of the solvent to the uncured composition does not result in, for example, flocculation of the nanosilica or precipitation of the fluoroelastomer. Furthermore, the solvent should be selected such that it has an appropriate drying rate. That is, the solvent should not dry too slowly, which can undesirably delay the process of making an anti-reflective coating from the uncured composition. It should also not dry too quickly, which can cause defects such as pinholes or craters in the resultant anti-reflective coating. Solvents of utility include polar aprotic organic solvents, and representative examples include aliphatic and alicyclic: ketones such as methyl ethyl ketone and methyl isobutyl ketone; esters such as propyl acetate; and combinations thereof. Preferred solvents include propyl acetate and methyl isobutyl ketone. Lower alkyl hydrocarbyl alcohols (e.g., methanol, ethanol and isopropanol) can be present in the solvent, but should comprise about 15% or less by weight of the solvent.

Uncured compositions of utility in forming low refractive index compositions according to the present invention optionally contain additives for lowering the coefficient of friction (i.e., to improve slip) and/or to improve the leveling behavior upon drying and curing of an uncured composition coating on a substrate. In some embodiments the additives are soluble in the uncured composition. In some embodiments the amount of the additives ranges from about 0.01 to about 3 weight percent of the uncured composition. Such additives are known to those of ordinary skill in this field, and include for example, compounds based on silicones or polysiloxanes, such as: silicone oil, high molecular weight polydimethylsiloxanes, polyether modified silicones, and silicone glycol copolymer surfactants.

The present invention further includes a method for forming an abrasion resistant anti-reflective coating on a substrate, said abrasion resistant anti-reflective coating having a scratched percent of about 10 or less as determined by Method 4 (as taught herein) after abrasion by Method 1 (as taught herein), comprising: (i) combining (i-a) at least one of a hydrolysis and condensation product of an oxysilane having a carbon-carbon double bond, wherein the at least one of a hydrolysis and condensation product is formed by contacting, in the presence of an organic acid and a lower alkyl alcohol, the oxysilane with from about 3 to about 9 moles of water per mole of hydrolyzable functional group bonded to the silicon of the oxysilane, and (i-b) a plurality of solid nanosilica particles to form a nanosilica composite precursor, the plurality of solid nanosilica particles comprising at least about 10 volume percent of the abrasion resistant anti-reflective coating; (ii) ageing the nanosilica composite precursor for at least about 1 hour at a temperature of at least about 25°C to form a nanosilica composite; (iii) combining the nanosilica composite, a fluoroelastomer having at least one cure site, a multiolefinic crosslinker, and a free radical polymerization initiator to form an uncured composition; (iv) applying a coating of the uncured composition on a substrate to form an uncured composition coating on the substrate; (v) optionally, reducing the amount of solvent in the liquid mixture coating to form a (solvent-reduced) uncured composition on the substrate; and (vi) curing the uncured composition coating and thereby forming an abrasion resistant anti-reflective coating on the substrate.

The present method for forming the anti-reflective coating results in the plurality of solid nanosilica particles being located within the anti-reflective coating substantially adjacent to the substrate.

The present method includes a step of combining oxysilane hydrosylate and/or condensate and solid nanosilica to form a nanosilica composite precursor. Such combining can be carried out by known methodology, such as weighing out appropriate amounts of components, and transferring these components to a static or agitated vessel.

The present method includes a step of ageing the nanosilica composite precursor to form a nanosilica composite. Ageing of the nanosilica composite precursor is described earlier herein.

The present method includes a step of combining the nanosilica composite, a fluoroelastomer having at least one cure site, a multiolefinic crosslinker, and a free radical polymerization initiator to form an uncured composition. Such combining can be carried out by known methodology, such as weighing out appropriate amounts of components, and transferring these components to an agitated vessel. In one embodiment, an uncured composition is formed by adding nanosilica composite to a mixture comprising the other components of the uncured composition and' polar aprotic organic solvent.

The present method includes a step of applying a coating of the uncured composition on an optical display substrate to form an uncured composition coating on the surface of the substrate. In one embodiment, the step of coating can be carried out in a single coating step. Coating techniques useful for applying the uncured composition coating onto the substrate in a single coating step are those capable of forming a thin, uniform layer of liquid on a substrate, such as microgravure coating, for example, as described in US patent publication no. 2005/18733.

The present method includes an optional step of reducing the amount of solvent in the uncured composition coating to form a (reduced-solvent) uncured composition coating on the substrate. The amount of solvent in the uncured composition coating can be reduced by known methods, for example, heat, vacuum and a flow of inert gas in proximity to the coated liquid mixture. In this embodiment, at least about 95 weight% of the solvent is removed from the uncured composition coating before curing.

The present method includes a step of curing the uncured composition coating and thereby forming an anti-reflective coating on the substrate. As discussed previously herein, the uncured composition coating is cured, preferably by a free radical initiation mechanism. Free radicals may be generated by known methods such as by the thermal decomposition of an organic peroxide, optionally included in the uncured composition, or by radiation such as ultraviolet (UV) radiation, gamma radiation, or electron beam radiation. Uncured compositions are preferably UV cured due to the relative low cost and speed of this curing technique when applied on an industrial scale.

The cured anti-reflective coating has a thickness less than about 120 nm and greater than about 80 nm, and preferably less than about 110 nm and greater than about 90 nm, most preferably about 100 nm.

The present invention further includes an article comprising a transparent substrate having an abrasion resistant anti-reflective coating, wherein the abrasion resistant anti-reflective coating comprises the reaction product of: (i) a fluoroelastomer having at least one cure site; (ii) a multiolefinic crosslinker; (iii) a free radical polymerization initiator; (iv) a nanosilica composite, comprising (iv-a) a plurality of solid nanosilica particles comprising at least about 10 volume percent of the abrasion resistant anti-reflective coating, and (iv-b) at least one of a hydrolysis and condensation product of an oxysilane having a carbon-carbon double bond, wherein the at least one of a hydrolysis and condensation product is formed by contacting, in the presence of an organic acid and a lower alkyl alcohol, the oxysilane with from about 3 to about 9 moles of water per mole of hydrolyzable functional group bonded to the silicon of the oxysilane; wherein the nanosilica composite is aged for at least about 1 hour at a temperature of at least about 25°C prior to formation of the reaction product.

The plurality of solid nanosilica particles are located within the anti-reflective coating substantially adjacent to the substrate, i.e., a particle stratified anti-reflective coating.

Substrates having an abrasion resistant anti-reflective coating of the present low refractive index composition find use as display surfaces, optical lenses, windows, optical polarizers, optical filters, glossy prints, photographs, and clear polymer films. Substrates may be either transparent or anti-glare and include acetylated cellulose (e.g., triacetyl cellulose (TAC)), polyester (e.g., polyethylene terephthalate (PET)), polycarbonate, polymethylmethacrylate (PMMA), polyacrylate, polyvinyl alcohol, polystyrene, glass, vinyl, and nylon. Preferred substrates are TAC, PET and PMMA. The substrates optionally have a hardcoat applied between the substrate and the anti-reflective coating, such as but not limited to an acrylate hardcoat.

As used herein, the terms "specular reflection" and "specular reflectance" refer to the reflectance of light rays into an emergent cone with a vertex angle of about 2 degrees centered around the specular angle. The terms "diffuse reflection" or "diffuse reflectance" refer to the reflection of rays that are outside the specular cone defined above. The specular reflectance for the anti-reflective coatings formed from the present low refractive index compositions on transparent substrates is about 2.2% or less, preferably about 1.7% or less.

The low refractive index compositions of the present invention have exceptional resistance to abrasion and low Rᵥᵢₛ when used as anti-reflection coatings on display substrates. The present invention includes an anti-reflective coating having Rᵥᵢₛ less than about 1.3% and a scratched percent less than or equal to 10, preferably less than or equal to 7, as determined by Method 4 (as taught herein) after abrasion by Method 1 (as taught herein).

### EXAMPLES

### MATERIALS/MANUFACTURERS:

APTMS: acryloxypropyltrimethoxy silane, 92% oxysilane, available from Aldrich, Saint Louis, Mo, USA
ATMS: allyltrimethoxy silane, 95% oxysilane, available from Aldrich, Saint Louis, Mo, USA
Darocur® ITX: mixture of 2-isopropylthioxanthone and 4-isopropylthioxanthone, photoinitiator available from Ciba Specialty Chemicals, Tarrytown, NY, USA
HTES: 5-hexenyltriethoxy silane, 95% oxysilane, available from Gelest Inc., Morrisville, Pa, USA
Irgacure® 651: 2, 2-dimethoxy-1, 2-diphenylethane-1-one, photoinitiator available from Ciba Specialty Chemicals, Tarrytown, NY, USA.
Irgacure® 907: 2-methyl-1 [4-(methylthio)phenyl]-2-morpholinopropan-1-one, photoinitiator available from Ciba Specialty Chemicals, Tarrytown, NY, USA
Nissan MEK-ST: silica colloid in methyl ethyl ketone (MEK) containing about 0.5 weight percent water, median particle diameter d₅₀ of about 10-16 nm, 30-32 wt% silica, dry density of about 2.32 g/cm³, available from Nissan Chemical America Co., Houston, TX, USA. Examination of Nissan MEK-ST by solid state ²⁹Si and ¹³C NMR (nuclear magnetic resonance) spectroscopy reveals that the surface (reactive silanols) of the MEK-ST nanosilica particles is functionalized with trimethylsilyl substituents.

### Characterization of the Extent to which Nissan MEK-ST Solid Nanosilica Reactive Silanols are Substituted with Trimethylsilyl Substituents:

Characterization of the extent to which solid nanosilica reactive silanols are substituted with unreactive substituents can be performed by DRIFTS (diffuse reflectance infrared Fourier transform spectroscopy). Characterization of the extent to which Nissan MEK-ST solid nanosilica reactive silanols are substituted with unreactive trimethylsilyl substituents is performed by DRIFTS as follows.

The solvent in the nanosilica colloid is removed by evaporation at room temperature to produce the silicon oxide nanocolloid powder. DRIFTS measurements are made with the use of a Harrick 'praying Mantis' DRIFTS accessory in a Biorad FTS 6000 FTIR Spectrometer. Samples are diluted to a concentration of 10% in KCl for DRIFTS analysis. Grinding is avoided in preparing the dilutions to avoid changing the nature of the surface of the nanosilica. Data processing is performed using the GRAMS/32 spectroscopy software suite by Thermo Scientific. After baseline offset correction, the data is transformed using the Kubelka-Munk transform to linearize the response to sample concentration. Spectra are normalized to the height of the silica overtone band near 1874 cm⁻¹ in all comparisons to correct for slight differences in sample concentration. A sample of Nissan MEK-ST is compared with a sample of Nissan IPA-ST (Nissan IPA-ST is unfunctionalized Nissan MEK-ST in isopropyl alcohol). A DRIFTS spectrum is obtained on a sample. The sample is then introduced into a closed vessel containing an open container of APTMS and maintained in the vessel for 1 hour under standard conditions. Without disrupting the sample, a DRIFTS spectrum of the sample is then obtained. The band observed at about 3737 cm⁻¹ corresponds to reactive silanol groups. For Nissan IPA-ST, the intensity of this band is significantly reduced as a result of exposure of the sample to APTMS. Without wishing to be bound by theory, the present inventors believe that this is due to the unfunctionalized reactive silanols interacting with the APTMS. For Nissan MEK-ST, there is substantially no change in the intensity of this band as a result of exposure of the sample to APTMS. Without wishing to be bound by theory, the present inventors believe that this is due to the relative absence of reactive silanols on the surface of Nissan MEK-ST for the APTMS to interact with. Based on the integrated intensity of the reactive silanol band at 3737 cm⁻¹, which is derived on the Nissan IPA-ST sample, it is estimated that the reactive silanol coverage on the Nissan MEK-ST sample is less than 5% of the coverage that is observed on the Nissan IPA-ST sample. Therefore, approximately 95% or more of the reactive silanols on the surface of Nissan MEK-ST are substituted with an unreactive substituent (trimethylsilyl).
OTMS: 7-octenyltrimethoxy silane, 95% oxysilane, available from Gelest Inc., Morrisville, Pa, USA
SR295: pentaerythritol tetraacrylate, non-fluorinated multiolefinic crosslinker available from Sartomer Co., Exton, PA, USA
SR247: neopentyl glycol diacrylate, non-fluorinated multiolefinic crosslinker available from Sartomer Co., Exton, PA, USA
SKK Hollow Nanosilica: "ELCOM" grade hollow nanosilicon oxide colloid in methyl isobutyl ketone (MIBK), median particle diameter d₅₀ of about 41 nm, about 20-23 wt% silica, dry density of about 1.59 g/cm³, available from Shokubai Kasei Kogyo Kabushiki Kaisha, Japan
TABTC: triallyl-1,3,5-benzenetricarboxylate, non-fluorinated multiolefinic crosslinker, available from Aldrich, Saint Louis, Mo, USA
TAC: triallyl cyanurate (2,4,6-triallyloxy-1,3,5-triazine), non-fluorinated multiolefinic crosslinker, available from Aldrich, Saint Louis, Mo, USA
TAIC: triallyl isocyanurate (1,3,5-triallyl-1,3,5-triazine-2,4,6(1 H,3H,5H)-trione), non-fluorinated multiolefinic crosslinker, available from Aldrich, Saint Louis, Mo, USA
UTMS: 10-undecenyltrimethoxy silane, 95% oxysilane, available from Gelest Inc., Morrisville, Pa, USA
Viton® GF200S: copolymer of vinylidene fluoride, tetrafluoroethylene, hexafluoropropylene and a cure site monomer, a fluoroelastomer available from DuPont Performance Elastomers, DE, USA.

### METHODS

### Method 1: Surface Abrasion

A 3.7 cm by 7.5 cm piece of substrate film coated with an anti-reflective coating of the present invention is mounted, with the coated surface up, onto the surface of a flat glass plate by fastening the edges of the film to the plate with adhesive tape. Liberon grade #0000 steel wool is cut into patches slightly larger than 1 by 1 cm. A soft (compliant) foam pad cut to 1 by 1 cm is placed over the steel wool pad and a 200-gram brass weight held in a slip fit Delrin® sleeve is placed on top of the foam pad. The sleeve is moved by a stepping motor driven translation stage model MB2509P5J-S3 CO18762 A VELMEX VXM stepping motor controller drives the stepping motor. The steel wool and weight assembly are placed on the film surface and rubbed back and forth over the film surface, for 10 cycles (20 passes) over a distance of 3 cm at a velocity of 5 cm/sec.

### Method 2: Measurement of Specular Reflectance (R_{VIS})

A 3.7 cm x 7.5 cm piece of substrate film coated with an anti-reflective coating of the present invention is prepared for measurement by adhering a strip of black PVC electrical tape (Nitto Denko, PVC Plastic tape #21) to the uncoated side of the film, in a manner that excludes trapped air bubbles, to frustrate the back surface reflections. The film is then held at normal to the spectrometer's optical path. The reflected light that is within about 2 degrees of normal incidence is captured and directed to an infra-red extended range spectrometer (Filmetrics, model F50). The spectrometer is calibrated between 400 nm and 1700 nm with a low reflectance standard of BK7 glass with its back surface roughened and blackened. The specular reflection is measured at normal incidence with an acceptance angle of about 2 degrees. The reflection spectrum is recorded in the range from 400 nm to 1700 nm with an interval of about 1 nm. A low noise spectrum is obtained by using a long detector integration time so that the instrument is at full range or saturated with about a 6% reflection. A further noise reduction is achieved by averaging 3 or more separate measurements of the spectrum. The reflectance reported from the recorded spectrum is the result of a color calculation of x, y, and Y where Y is reported as the specular reflectance (R_{VIS}). The color coordinate calculation is performed for a 10 degree standard observer with a type C light source.

### Method 3: Haze

Haze is measured according to the method of ASTM D 1003, "Standard Test Method for Haze and Luminous Transmittance of Transparent Plastics", using a "BYK Gardner Haze-Guard Plus" available from BYK-Gardner USA, Columbia, MD.

### Method 4: Quantifying Surface Abrasion

The present Method involves imaging a film abraded by Method 1 and quantifying the scratched percent area on the abraded film by software manipulation of the image.

No single image analysis procedure covering all possibilities exists. One of ordinary skill in the art will understand that the image analysis performed is very specific. General guidance is given here with the understanding that unspecified parameters are within the ability of the practitioner of ordinary skill to discern without undue experimentation.

This analysis assumes there are both "on axis" and "off axis" illumination of the sample and the image is taken in reflected light at about 7 degrees from normal incidence. It is also assumed that the scratches are in a vertical orientation in the image. Appropriate image contrast can be established without undue experimentation by the practitioner or ordinary skill. Image contrast is controlled by the lighting intensity, the camera white and dark reference settings, the index of refraction of the substrate, the index of refraction and the thickness of the low refractive index composition. Also to increase the contrast of the image a piece of black electrical tape is adhered to the back of the substrate. This has the effect of frustrating the back surface reflection.

The image used for analyzing the scratched area on the film generated by Method 1 is obtained from a video camera connected to a frame grabber card in a computer. The image is a grey scale 640 by 480 pixel image. The optics on the camera magnifies the abraded area so that the width of the imaged region is 7.3 mm (which is most of the 1 cm wide region that is abraded.)

The Adobe PhotoShop V7 with Reindeer Graphic's Image Processing Toolkit plug-ins for PhotoShop is used to process the image as described below.

First the image is converted to a grey scale image (if it is not already). A motion blur of 25 pixels in the direction of the scratches is performed to emphasize the scratches and de-emphasize noise and extraneous damage to the film. This blur does three things to clean up the image. First, damage to the film in other directions than the abrasion direction is washed out by averaging with the background. Second, individual white dots are removed by averaging with the background. Third, any small gaps in the scratches are filled in by averaging between the in line scratches.

In preparation for an automatic contrast adjustment of the pixel intensities in the image, four pixels near the upper left corner are selected. These pixels are filled in at an intensity of 200 (out of 255). This step assures that there is some mark in the image that is other than the dark background of the un-abraded material, in the event that there are no bright scratches in the image. This has the effect of limiting the automatic contrast adjustment. The automatic contrast adjustment used is called "histogram limits: max - min" which alters the contrast of the image so that the histogram fills the 0 to 255 levels available in an 8-bit grey scale image.

A custom filter is then applied to the image that takes a derivative in the horizontal direction and then adds back the original image to the derivative image. This has the effect of emphasizing the edges of vertical scratches.

A bi-level threshold is applied at the 128 grey level. Pixels at a level of 128 or higher are set to white (255) and pixels below a brightness of 128 are set to black (0). The image is then inverted making the black pixels white and the white pixels black. This is to accommodate the global measurement feature used in the final step, which is the application of the global measurement of the black area. The result is given in terms of the percent of black pixels in the image. This is the percent of the total area that is scratched by Method 1 (i.e., scratched%). The entire procedure takes a few seconds per image. Many abraded samples can be evaluated quickly and repeatably by this Method independent of a human operator required in conventional methods.

### Method 5: Coating Method

A substrate film is coated with an uncured composition using a Yasui-Seiki Co. Ltd., Tokyo, Japan, microgravure coating apparatus as described in U.S. Pat. No. 4,791,881. The apparatus includes a doctor blade and a Yasui-Seiki Co. gravure roll #230 (230 lines/inch), 1.5 to 3.5 µm wet thickness range) having a roll diameter of 20 mm. Coating is carried out using a gravure roll revolution of 3-11 rpm and a transporting line speed of 0.5 m/min.

### Method 6: Curing Method

The coated substrate is cured using a UV exposure unit supplied by Fusion UV Systems / Gaithersburg MD consisting of a LH-I6P1 UV source (200w/cm) coupled to a DRS Conveyer/UV Processor (15 cm wide) with controlled nitrogen inerting capability over a measured range of 10 to 1,000 ppm oxygen.

Lamp power and conveyor speed are set to give a film cure using a measured energy density of 500-600 millijoules/cm² (UV-A irradiation) at about 0.7 to 1.0 m/min transport rate.

An EIT UV Power Puck® radiometer is used to measure the UV total energy in the UV-A, UV-B, UV-C and UV-V band widths. The "H" bulb used in the LH-I6 has the following typical spectral output in the UV-A, UV-B, UV-C and UV-V bands at lamp power and conveyor speed settings typically used for curing the coated substrate:

**Typical "H" Bulb Spectral Performance at 0.9 m/min, 30% Power**

| band | range (nm) | energy (J/cm²) | time (sec) | line speed (m/min) | exposure zone (cm) |
|---|---|---|---|---|---|
| UV-V | 395-445 | 0.270 | 2.1 | 0.9 | 3.1 |
| UV-A | 320-390 | 0.570 | 2.1 | 0.9 | 3.1 |
| UV-B | 280-320 | 0.422 | 2.1 | 0.9 | 3.1 |
| UV-C | 250-260 | 0.082 | 2.1 | 0.9 | 3.1 |

A coated substrate film is placed on a metal plate preheated to about 70°-75°C surface temperature on a hotplate and held in contact with the plate by a frame. The film and frame assembly is then placed on the conveyor belt of the UV exposure unit and transported through the exposure zone at a speed of about 0.9 m/min. The lamp power is set to about 30%. The exposure zone is purged with nitrogen gas so that the oxygen level in the exposure zone is less than 100 ppm and typically less than 50 ppm.

### Example 1

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.58 g APTMS and 9.42 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1. The mixture was maintained at 25°C for about 1 hr to form the nanosilica composite.

A mixture comprising fluoroelastomer is formed by combining and dissolving 1.0 g of Viton® GF200S, 0.1 g TAIC and 0.1 g Irgacure-651 in 16.85 g propyl acetate. To this mixture is added 3.44 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). Rᵥᵢₛ of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 2

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.58 g APTMS and 9.42 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1. The mixture was maintained at 25°C for about 1 hr to form the nanosilica composite.

A mixture comprising fluoroelastomer is formed by combining and dissolving 1.0 g of Viton® GF200S, 0.1 g TAIC and 0.1 g Irgacure-651 in 16.55 g propyl acetate. To this mixture is added 2.4 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). Rᵥᵢₛ of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 3

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.16 g APTMS and 18.84 g acidic ethanol in a plastic bottle and stirring at about 25°C for about 72 hr. Gas chromatographic analysis showed less than 1% of the unhydrolyzed oxysilane remained after stirring for 24 hr.

A nanosilica composite precursor is formed by combining 12.0 g of Nissan MEK-ST (31.8 wt% SiO₂ in MEK) and 17.4 g of mixture #1. The mixture was maintained at 25°C for about 4 hr to form the nanosilica composite.

A mixture comprising fluoroelastomer is formed by combining and dissolving 5.0 g of Viton® GF200S, 0.5 g TAIC and 0.3 g Irgacure-907 in 80.7 g propyl acetate. To this mixture is added 12.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). Rᵥᵢₛ of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 4

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.16 g APTMS and 18.84 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 12.0 g of Nissan MEK-ST (31.8 wt% SiO₂ in MEK) and 17.4 g of mixture #1. The mixture was maintained at 25°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 40.0 g propyl acetate. To this mixture is added 8.6 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). Rᵥᵢₛ of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 5

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.16 g APTMS and 18.84 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1. The mixture was maintained at 25°C for about 20 hr to form the nanosilica composite.

A mixture comprising fluoroelastomer is formed by combining and dissolving 1.5 g of Viton® GF200S, 0.15 g TAIC and 0.09 g Irgacure-907 in 24.2 g propyl acetate. To this mixture is added 3.6 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 6

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.16 g APTMS and 18.84 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 12.0 g of Nissan MEK-ST (31.8 wt% SiO₂ in MEK) and 17.4 g of mixture #1. The mixture was maintained at 25°C for about 9 days to form the nanosilica composite.

A mixture comprising fluoroelastomer is formed by combining and dissolving 2.5 g of Viton® GF200S, 0.25 g TAIC and 0.15 g Irgacure-907 in 45.5 g propyl acetate. To this mixture is added 8.6 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). Rᵥᵢₛ of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 7

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.16 g APTMS and 18.84 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 12.0 g of Nissan MEK-ST (31.8 wt% SiO₂ in MEK) and 17.4 g of mixture #1. The mixture was maintained at 25°C for about 8 days to form the nanosilica composite.

A mixture comprising fluoroelastomer is formed by combining and dissolving 2.5 g of Viton® GF200S, 0.25 g TAIC and 0.15 g Irgacure-907 in 45.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 8

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.74 g APTMS and 28.26 g acidic ethanol in a plastic bottle and stirring at about 25°C for about 48 hr. Gas chromatographic analysis showed less than 1 % of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1. The mixture was maintained at 50°C for about 24 hr to form the nanosilica composite.

A mixture comprising fluoroelastomer is formed by combining and dissolving 2.0 g of Viton® GF200S, 0.2 g TAIC and 0.12 g Irgacure-907 in 36.4 g propyl acetate. To this mixture is added 6.9 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 9

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.74 g APTMS and 28.26 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 45.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 10

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.72 g APTMS and 28.3 g acidic ethanol in a plastic bottle and stirring at about 25°C for about 72 hr. Gas chromatographic analysis showed less than 1 % of the unhydrolyzed oxysilane remained after stirring for 24 hr.

A nanosilica composite precursor is formed by combining 16.0 g of Nissan MEK-ST (31.8 wt% SiO₂ in MEK) and 23.12 g of mixture #1. The mixture was maintained at 50°C for about 28 hr to form the nanosilica composite.

A mixture comprising fluoroelastomer is formed by combining and dissolving 2.5 g of Viton® GF200S, 0.25 g TAIC, 0.075 g Irgacure-907 and 0.015 g Darocur ITX in 44.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 11

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.72 g APTMS and 28.3 g acidic ethanol in a plastic bottle and stirring at about 25°C for about 72 hr. Gas chromatographic analysis showed less than 1% of the unhydrolyzed oxysilane remained after stirring for 24 hr.

A nanosilica composite precursor is formed by combining 16.0 g of Nissan MEK-ST (31.8 wt% SiO₂ in MEK) and 23.12 g of mixture #1. The mixture was maintained at 50°C for about 28 hr to form the nanosilica composite.

A mixture comprising fluoroelastomer is formed by combining and dissolving 2.5 g of Viton® GF200S, 0.25 g TAIC, 0.053 g SR295 and 0.15 g Irgacure-907 in 44.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 12

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.72 g APTMS and 28.3 g acidic ethanol in a plastic bottle and stirring at about 25°C for about 72 hr. Gas chromatographic analysis showed less than 1 % of the unhydrolyzed oxysilane remained after stirring for 24 hr.

A nanosilica composite precursor is formed by combining 16.0 g of Nissan MEK-ST (31.8 wt% SiO₂ in MEK) and 23.12 g of mixture #1. The mixture was maintained at 50°C for about 28 hr to form the nanosilica composite.

A mixture comprising fluoroelastomer is formed by combining and dissolving 2.5 g of Viton® GF200S, 0.25 g TAIC, 0.064 g SR247 and 0.15 g Irgacure-907 in 44.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 13

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.72 g APTMS and 28.3 g acidic ethanol in a plastic bottle and stirring at about 25°C for about 72 hr. Gas chromatographic analysis showed less than 1 % of the unhydrolyzed oxysilane remained after stirring for 24 hr.

A nanosilica composite precursor is formed by combining 16.0 g of Nissan MEK-ST (31.8 wt% SiO₂ in MEK) and 23.12 g of mixture #1. The mixture was maintained at 50°C for about 28 hr to form the nanosilica composite.

A mixture comprising fluoroelastomer is formed by combining and dissolving 2.5 g of Viton® GF200S, 0.25 g TAC and 0.15 g Irgacure-907 in 44.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 14

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.72 g APTMS and 28.3 g acidic ethanol in a plastic bottle and stirring at about 25°C for about 72 hr. Gas chromatographic analysis showed less than 1 % of the unhydrolyzed oxysilane remained after stirring for 24 hr.

A nanosilica composite precursor is formed by combining 16.0 g of Nissan MEK-ST (31.8 wt% SiO₂ in MEK) and 23.12 g of mixture #1. The mixture was maintained at 50°C for about 28 hr to form the nanosilica composite.

A mixture comprising fluoroelastomer is formed by combining and dissolving 2.5 g of Viton® GF200S, 0.25 g TABTC and 0.15 g Irgacure-907 in 44.5 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 15

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.67 g ATMS, 1.4 g distilled water and 11.93 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.68 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 16

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.67 g ATMS, 1.4 g distilled water and 11.93 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.68 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC, 0.065 g SR247 and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 17

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.04 g ATMS, 0.58 g distilled water and 13.38 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.68 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 18

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.04 g ATMS, 0.58 g distilled water and 13.38 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.68 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC, 0.065 g SR247 and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 19

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.63 g ATMS, 0.03 g distilled water and 14.34 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.67 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 20

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.63 g ATMS, 0.03 g distilled water and 14.34 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.67 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC, 0.065 g SR247 and 0.15 g Irgacure-907 in 44.35 g propyl acetate. To this mixture is added 6.0 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 21

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.87g HTES and 14.13 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 2.46 g of Nissan MEK-ST (31.8 wt% SiO₂ in MEK) and 4.26 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 23.8 g propyl acetate and 15.9 g methyl isobutyl ketone. To this mixture is added 6.7 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 22

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.87g OTMS and 14.13 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 2.46 g of Nissan MEK-ST (31.8 wt% SiO₂ in MEK) and 3.41 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 24.3 g propyl acetate and 16.2 g methyl isobutyl ketone. To this mixture is added 5.9 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 23

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.87g UTMS and 14.13 g acidic ethanol in a plastic bottle and stirring at about 25°C for about 24 hr. Gas chromatographic analysis showed less than 1 % of the unhydrolyzed oxysilane remained after stirring for 24 hr.

A nanosilica composite precursor is formed by combining 2.46 g of Nissan MEK-ST (31.8 wt% SiO₂ in MEK) and 3.41 g of mixture #1. The mixture was maintained at 50°C for about 24 hr to form the nanosilica composite.

A mixture comprising fluoroelastomer is formed by combining and dissolving 2.5 g of Viton® GF200S, 0.25 g TAIC and 0.15 g Irgacure-907 in 24.3 g propyl acetate and 16.2 g methyl isobutyl ketone. To this mixture is added 5.9 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Comparative Example A

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.58 g APTMS and 9.42 g acidic ethanol in a plastic bottle and stirring at about 25°C for about 72 hr. Gas chromatographic analysis showed less than 1% of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1 at 25°C. The mixture was not allowed to age and was used soon after mixing.

A mixture comprising fluoroelastomer is formed by combining and dissolving 1.0 g of Viton® GF200S, 0.1 g TAIC and 0.1 g Irgacure-651 in 16.0 g propyl acetate. To this mixture is added 3.43 g of the freshly prepared nanosilica composite precursor to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Comparative Example B

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 0.58 g APTMS and 9.42 g acidic ethanol in a plastic bottle and stirring at about 25°C for about 72 hr. Gas chromatographic analysis showed less than 1 % of the unhydrolyzed oxysilane remained after stirring for 24 hr.

A nanosilica composite precursor is formed by combining 6.0 g of Nissan MEK-ST (31.8 wt% SiO₂ in MEK) and 8.7 g of mixture #1 at 25°C. The mixture was not allowed to age and was used soon after mixing.

A mixture comprising fluoroelastomer is formed by combining and dissolving 1.0 g of Viton® GF200S, 0.1 g TAIC and 0.1 g Irgacure-651 in 16.1 g propyl acetate. To this mixture is added 2.4 g of the freshly prepared nanosilica composite precursor to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Comparative Example C

Vinyl modified/HMDS particles are prepared using the procedure of US 2006/0147177 A1 [0127] (to 3M) as follows.

A solution of 10 g 1-methoxy-2-propanol containing 0.57g vinyltrimethoxy silane (Aldrich) was prepared and added slowly to 15g of gently stirring Nalco 2327 (40.9wt% colloidal silica in water, ammonium stabilized, available from Nalco, Naperville, IL) at ambient temperature. An additional 5.42g (5ml) of 1-methoxy-2-propanol was used to rinse the silane solution container into the silica mixture. The reaction mixture was heated to 90°C for approximately 20 hours.

The reaction mixture was cooled to ambient temperature then gently evaporated to dryness by passing a nitrogen stream across the surface. The white granular solids that resulted were combined with 50ml tetrahydrofuran and 2.05g hexamethyldisilazane (HMDS, Aldrich), then placed in an Ultrasonic bath for 10 hours to re-disperse and react. The resulting slightly cloudy dispersion was evaporated to dryness under vacuum on a rotary evaporator. The resulting solids were placed in 100°C air-oven for about 20hr. This yielded 6.52g of vinyl modified/HMDS particles.

A dispersion of vinyl modified/HMDS particles was prepared by combining 3.00 g of vinyl modified/HMDS particles with 12.00 g of methylethyl ketone (MEK) then placing in an Ultrasonic bath for 12 hours to disperse. Not all of the particles dispersed as there was a small amount of sediment in the dispersion. The dispersion was filtered easily through 0.45 micron glass micro-fiber filter to remove the sediment and yield a dispersion containing 20.4w% vinyl modified/HMDS particles in MEK.

A mixture comprising fluoroelastomer is formed by combining and dissolving 2.5 g of Viton® GF200S, 0.25 g TAIC and 0.15 g Irgacure-907 in 46.5 g propyl acetate. To this mixture is added 3.83 g of the dispersion containing 20.4w% vinyl modified/HMDS particles in MEK to form an uncured composition.

The resultant uncured composition is then filtered through a 0.45 µ glass microfiber membrane filter and used for coating within twenty-four hours of preparation.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Comparative Example D

A-174/HMDS particles are prepared using the procedure of US 2006/0147177 A1 [0128] (to 3M) as follows.

A solution of 10 g 1-methoxy-2-propanol containing 0.47g 3-(trimethoxysilyl)propylmethacrylate (A-174, Aldrich) was prepared and added slowly to 15g of gently stirring Nalco 2327 (40.9wt% colloidal silica in water, ammonium stabilized, available from Nalco, Naperville, IL) at ambient temperature. An additional 5.42g (5ml) of 1-methoxy-2-propanol was used to rinse the silane solution container into the silica mixture. The reaction mixture was heated to 90°C for approximately 20 hours.

The reaction mixture was cooled to ambient temperature then gently evaporated to dryness by passing a nitrogen stream across the surface. The white granular solids that resulted were combined with 50ml tetrahydrofuran and 2.05g hexamethyldisilazane (HMDS, Aldrich), then placed in an Ultrasonic bath for 10 hours to re-disperse and react. The resulting slightly cloudy dispersion was evaporated to dryness under vacuum on a rotary evaporator. The resulting solids were placed in 100°C air-oven for about 20hr. This yielded 5.0g of A-174/HMDS particles.

A dispersion of A-174/HMDS particles was prepared by combining 3.00 g of A-174/HMDS particles with 12.00 g of methylethyl ketone (MEK) then placing in an Ultrasonic bath for 12 hours to disperse. Not all of the particles dispersed as there was a small amount of sediment in the dispersion. The dispersion was filtered easily through 0.45 micron glass micro-fiber filter to remove the sediment and yield a dispersion containing 20.4w% A-174/HMDS particles in MEK.

A mixture comprising fluoroelastomer is formed by combining and dissolving 2.5 g of Viton® GF200S, 0.25 g TAIC and 0.15 g Irgacure-907 in 46.5 g propyl acetate. To this mixture is added 3.83 g of the dispersion containing 20.4w% A-174/HMDS particles in MEK to form an uncured composition.

The resultant uncured composition is then filtered through a 0.45 µ glass microfiber membrane filter and used for coating within twenty-four hours of preparation.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 1.

### Example 24

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 2.32 g APTMS, 1.0 g distilled water and 16.7 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 1.92 g of Nissan MEK-ST (31.8 wt% SiO₂ in MEK), 3.78 g SKK Hollow Nanosilica (22.1 wt% SiO₂ in MIBK) and 2.77 g of mixture #1. The mixture was maintained at 25°C for about 20 hr to form the nanosilica composite.

A mixture comprising fluoroelastomer is formed by combining and dissolving 1.5 g of Viton® GF200S, 0.15 g TAIC and 0.15 g Irgacure-651 in 33.5 g propyl acetate. To this mixture is added all 8.47 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 2.

### Example 25

Acidic ethanol is formed by combining 0.4 g glacial acetic acid and 100 g ethanol (95 volume%, containing 7.7 wt% water).

Mixture #1, an oxysilane hydrolysate and condensate solution, is formed by combining 1.44 g APTMS and 23.57 g acidic ethanol in a plastic bottle and stirring at about 25°C for about 24 hr. Gas chromatographic analysis showed less than 1% of the unhydrolyzed oxysilane remained after stirring for 24 hr.

A nanosilica composite precursor is formed by combining 2.55 g of Nissan MEK-ST (31.8 wt% SiO₂ in MEK), 5.04 g SKK Hollow Nanosilica (22.1 wt% SiO₂ in MIBK) and 7.46 g of mixture #1. The mixture was maintained at 50°C for about 24 hr to form the nanosilica composite.

A mixture comprising fluoroelastomer is formed by combining and dissolving 2.0 g of Viton® GF200S, 0.2 g TAIC and 0.12 g Irgacure-907 in 26.0 g butyl acetate and 16.55 g methyl isobutyl ketone. To this mixture is added all 15.05 g of the nanosilica composite to form an uncured composition. The uncured composition is then filtered through a 0.45µ glass micro-fiber filter and used for coating.

A 60 cm by 10.2 cm strip of acrylate hard-coated triacetyl cellulose film is coated with the uncured composition by Method 5 (Coating Method). The coated film is cut into 2 sections, 30 cm by 10.2 cm each, and cured by Method 6 (Curing Method)

The coated and cured film sections are abraded by Method 1 (Surface Abrasion). R_{VIS} of the abraded film sections is measured by Method 2 (Measurement of Specular Reflectance). Haze of the abraded film sections is measured by Method 3 (Haze). Scratched % of the abraded film sections is measured by Method 4 (Quantifying Surface Abrasion). The results are reported in Table 2.

### Table 1:

Table 1 presents parameters and data for examples 1-23 and comparative examples A-D. Table 1 column headings are defined as follows: "phr nanosilica" (parts by weight of dry nanosilica per 100 parts by weight of fluoroelastomer); "volume% nanosilica" (100 times the quotient of the volume of dry nanosilica divided by the sum of the volumes of dry nanosilica plus fluoroelastomer plus multi-olefinic crosslinker(s)); "oxysilane" (the oxysilane used); "equivalents water per hydrolysable Si-OR" (ratio of the number of moles of water, used to form the oxysilane hydrolysate and condensate solution, divided by the product of the number of moles of oxysilane being hydrolyzed times the number of hydrolysable Si-OR groups on the oxysilane); "pph oxysilane vs. nanosilica" (parts by weight of oxysilane per 100 parts by weight of dry nanosilica); "nanosilica treatment temperature/time with oxysilane" (the temperature and time at temperature at which the nanosilica composite precursor is aged to form the nanosilica composite); "Rvis (%)" (specular reflectance as determined by method 2); "haze (%)" (haze as determined by method 3); "scratch (%)" (quantification of surface abrasion measured by method 4 after being abraded by method 1).

### Table 2:

Table 2 presents parameters and data for examples 24-25. Table 2 column headings are defined as follows: "phr solid nanosilica" (parts by weight of dry solid nanosilica per 100 parts by weight of fluoroelastomer); "volume% solid nanosilica" (100 times the quotient of the volume of dry solid nanosilica divided by the sum of the volumes of dry solid nanosilica plus dry hollow nanosilica plus fluoroelastomer plus multi-olefinic crosslinker(s)); "phr hollow nanosilica" (parts by weight of dry hollow nanosilica per 100 parts by weight of fluoroelastomer); "volume% hollow nanosilica" (100 times the quotient of the volume of dry hollow nanosilica divided by the sum of the volumes of dry solid nanosilica plus dry hollow nanosilica plus fluoroelastomer plus multi-olefinic crosslinker(s)); the remaining column headings are defined the same as the like column headings of Table 1.

**Table 1**

| ex # | phr nanosilica | volume% nanosilica | oxysilane | equivalents water per hydrolysable Si-OR | pph oxysilane vs. nanosilica | nanosilica treatment temperature /time with oxysilane | Rvis (%) | haze (%) | scratched (%) |
|---|---|---|---|---|---|---|---|---|---|
| 1 | 44.6 | 23.0 | APTMS | 5.40 | 24 | 25°C/1hr | 1.25 | 0.43 | 2.7 |
| 2 | 31.2 | 17.3 | APTMS | 5.40 | 24 | 25°C/1hr | 1.07 | 0.38 | 8.6 |
| 3 | 31.2 | 17.3 | APTMS | 5.40 | 24 | 25°C/4hr | 1.01 | 0.54 | 3.4 |
| 4 | 44.7 | 23.1 | APTMS | 5.40 | 24 | 25°C/24hr | 1.11 | 0.39 | 1.7 |
| 5 | 31.2 | 17.3 | APTMS | 5.40 | 24 | 25°C/20hr | 1.07 | 0.38 | 2.3 |
| 6 | 44.7 | 23.1 | APTMS | 5.40 | 24 | 25°C/9days | 1.29 | 0.52 | 0.5 |
| 7 | 31.2 | 17.3 | APTMS | 5.40 | 24 | 25°C/8days | 1.07 | 0.62 | 0.1 |
| 8 | 44.8 | 23.1 | APTMS | 5.40 | 24 | 50°C/24hr | 1.28 | 0.55 | 0.2 |
| 9 | 31.2 | 17.3 | APTMS | 5.40 | 24 | 50°C/24hr | 1.08 | 0.45 | 0.4 |
| 10 | 31.2 | 17.3 | APTMS | 5.50 | 24 | 50°C/28hr | 1.11 | 0.54 | 1.4 |
| 11 | 31.2 | 16.9 | APTMS | 5.50 | 24 | 50°C/28hr | 1.05 | 0.35 | 5.2 |
| 12 | 31.2 | 16.8 | APTMS | 5.50 | 24 | 50°C/28hr | 1.10 | 0.39 | 0.9 |
| 13 | 31.2 | 17.2 | APTMS | 5.50 | 24 | 50°C/28hr | 1.02 | 0.46 | 3.2 |
| 14 | 31.2 | 17.3 | APTMS | 5.50 | 24 | 50°C/28hr | 1.03 | 0.38 | 2.8 |
| 15 | 31.2 | 17.3 | ATMS | 4.18 | 48 | 50°C/24hr | 0.99 | 0.45 | 1.4 |
| 16 | 31.2 | 16.8 | ATMS | 4.18 | 48 | 50°C/24hr | 1.01 | 0.47 | 4.2 |
| 17 | 31.2 | 17.3 | ATMS | 4.65 | 30 | 50°C/24hr | 1.04 | 0.31 | 1.7 |
| 18 | 31.2 | 16.8 | ATMS | 4.65 | 30 | 50°C/24hr | 1.03 | 0.32 | 1.8 |
| 19 | 31.2 | 17.3 | ATMS | 5.45 | 18 | 50°C/24hr | 1.10 | 0.34 | 6.4 |
| 20 | 31.2 | 16.8 | ATMS | 5.45 | 18 | 50°C/24hr | 1.01 | 0.41 | 1.6 |
| 21 | 31.3 | 17.4 | HTES | 5.71 | 30 | 50°C/24hr | 1.04 | 0.29 | 8.3 |
| 22 | 31.3 | 17.4 | OTMS | 5.38 | 24 | 50°C/24hr | 1.03 | 0.25 | 9.4 |
| 23 | 31.3 | 17.4 | UTMS | 6.36 | 24 | 50°C/24hr | 1.06 | 0.26 | 9.3 |
| A | 44.5 | 23.0 | APTMS | 5.40 | 24 | N/A | 1.21 | 0.38 | 14.2 |
| B | 31.2 | 17.3 | APTMS | 5.40 | 24 | N/A | 1.05 | 0.33 | 11.5 |
| C | 31.2 | 17.3 | N/A | N/A | N/A | N/A | 1.18 | 0.28 | 98.4 |
| D | 31.2 | 17.3 | N/A | N/A | N/A | N/A | 1.22 | 0.22 | 99.5 |

**Table 2**

| ex # | phr solid nanosilica | volume% solid nanosilica | phr hollow nanosilica | volume% hollow nanosilica | oxysilane | equivalents water per hydrolysable Si-OR | pph oxysilane vs. nanosilica | nanosilica treatment temperature /time with oxysilane | Rvis (%) | haze (%) | scratched (%) |
|---|---|---|---|---|---|---|---|---|---|---|---|
| 24 | 40.6 | 15.0 | 55.7 | 30.0 | APTMS | 4.27 | 20.4 | 25°C/20hr | 0.98 | 0.45 | 1.6 |
| 25 | 40.6 | 15.0 | 55.7 | 30.0 | APTMS | 5.50 | 20.4 | 50°C/24hr | 1.13 | 0.29 | 0.5 |

## Claims

1. A low refractive index composition comprising a reaction product of:
(i) a fluoroelastomer having at least one cure site;
(ii) a multiolefinic crosslinker;
(iii) a free radical polymerization initiator;
(iv) a nanosilica composite comprising:
(iv-a) a plurality of nanosilica particles having at least 50% but less than 100% of reactive silanols functionalized with an unreactive substituent, and
(iv-b) at least one of a hydrolysis and condensation product of an oxysilane having i) a carbon-carbon double bond containing functional group, ii) an oxysilane functional group, and iii) a divalent organic radical connecting the carbon-carbon double bond containing functional group and the oxysilane functional group, wherein said at least one of a hydrolysis and condensation product is formed by contacting, in the presence of an organic acid and a lower alkyl alcohol, said oxysilane with from 3 to 9 moles of water per mole of hydrolyzable functional group bonded to the silicon of said oxysilane.

2. The low refractive index composition of claim 1, wherein said plurality of nanosilica particles comprises a plurality of solid nanosilica particles, and wherein said plurality of solid nanosilica particles comprises at least 10 volume% of said low refractive index composition.

3. The low refractive index composition of claim 1, wherein said nanosilica composite is aged for at least 1 hour at a temperature of at least 25°C prior to formation of said reaction product.

4. The low refractive index composition of claim 1, wherein said organic acid has a pKₐ in water at 25°C of at least 4.7.

5. The low refractive index composition of claim 1, wherein said plurality of nanosilica particles comprises a plurality of solid nanosilica particles, and wherein the amount of said oxysilane used to form said at least one of a hydrolysis and condensation product and the amount of said plurality of solid nanosilica particles is from 0.8 g to 110 g of said oxysilane per 100 g of said plurality of solid nanosilica particles.

6. The low refractive index composition of claim 1, wherein said plurality of nanosilica particles comprises a plurality of porous nanosilica particles, and wherein the amount of said oxysilane used to form said at least one of a hydrolysis and condensation product and the amount of said plurality of porous nanosilica particles is from 0.8 g to 120 g of said oxysilane per 100 g of said plurality of porous nanosilica particles.

7. An article comprising a substrate having an abrasion resistant anti-reflective coating having a scratched percent of 10 or less as determined by Method 4 (as disclosed in the "Methods" section of the description) after abrasion by Method 1 (as disclosed in the "Methods" section of the description), said abrasion resistant anti-reflective coating comprising a reaction product of:
(i) a fluoroelastomer having at least one cure site;
(ii) a multiolefinic crosslinker;
(iii) a free radical polymerization initiator; and
(iv) a nanosilica composite, comprising:
(iv-a) a plurality of solid nanosilica particles comprising at least 10 volume percent of said abrasion resistant anti-reflective coating and having at least 50% but less than 100% of reactive silanols functionalized with an unreactive substituent; and
(iv-b) at least one of a hydrolysis and condensation product of an oxysilane having i) a carbon-carbon double bond containing functional group, ii) an oxysilane functional group, and iii) a divalent organic radical connecting the carbon-carbon double bond containing functional group and the oxysilane functional group, and wherein said at least one of a hydrolysis and condensation product is formed by contacting, in the presence of an organic acid and a lower alkyl alcohol, said oxysilane with from 3 to 9 moles of water per mole of hydrolyzable functional group bonded to the silicon of said oxysilane; and wherein said nanosilica composite is aged for at least 1 hour at a temperature of at least 25°C prior to formation of said reaction product.

8. The article of claim 7, wherein said organic acid has a pKₐ in water at 25°C of at least 4.7.

9. The article of claim 7, wherein the amount of said oxysilane used to form said at least one of a hydrolysis and condensation product and the amount of said plurality of solid nanosilica particles is from 0.8 g to 110 g of said oxysilane per 100 g of said plurality of solid nanosilica particles.

10. The article of claim 7, wherein said plurality of solid nanosilica particles further comprises a plurality of porous nanosilica particles, and wherein the amount of said oxysilane used to form said at least one of a hydrolysis and condensation product and the amount of said plurality of porous nanosilica particles is from 0.8 g to 120 g of said oxysilane per 100 g of said plurality of porous nanosilica particles.

11. A method for forming an abrasion resistant anti-reflective coating on a substrate, said abrasion resistant anti-reflective coating having a scratched percent of 10 or less as determined by Method 4 as disclosed in the "Methods" section of the description after abrasion by Method 1as disclosed in the "Methods" section of the description, comprising:
(i) combining:
(i-a) at least one of a hydrolysis and condensation product of an oxysilane having i) a carbon-carbon double bond containing functional group, ii) an oxysilane functional group, and iii) a divalent organic radical connecting the carbon-carbon double bond containing functional group and the oxysilane functional group, wherein said at least one of a hydrolysis and condensation product is formed by contacting, in the presence of an organic acid and a lower alkyl alcohol, said oxysilane with from 3 to 9 moles of water per mole of hydrolyzable functional group bonded to the silicon of said oxysilane, and
(i-b) a plurality of solid nanosilica particles to form a nanosilica composite precursor, said plurality of solid nanosilica particles comprising at least 10 volume percent of said abrasion resistant anti-reflective coating and having at least 50% but less than 100% of reactive silanols functionalized with an unreactive substituent;
(ii) ageing said nanosilica composite precursor for at least 1 hour at a temperature of at least 25°C to form a nanosilica composite;
(iii) combining said nanosilica composite, a fluoroelastomer having at least one cure site, a multiolefinic crosslinker, and a free radical polymerization initiator to form an uncured composition;
(iv) applying a coating of said uncured composition on said substrate to form an uncured composition coating on said substrate; and
(v) curing said uncured composition coating and thereby forming said abrasion resistant anti-reflective coating on said substrate.

## Patentansprüche

1. Zusammensetzung mit geringem Brechungsindex, umfassend ein Reaktionsprodukt aus Folgendem:
(i) einem Fluorelastomer mit mindestens einer Härtungsstelle;
(ii) einem multiolefinisches Vernetzungsmittel;
(iii) einem Radikalkettenpolymerisations-Initiator;
(iv) einem Nanosilica-Verbund, umfassend:
(iv-a) eine Mehrzahl von Nanosilica-Teilchen mit mindestens 50 %, aber weniger als 100 % von reaktionsfähigen Silanolen, die mit einem reaktionsunfähigen Substituenten funktionalisiert sind, und
(iv-b) mindestens eines von einem Hydrolyse- und einem Kondensationsprodukt eines Oxysilans mit i) einer Kohlenstoff-Kohlenstoff-Doppelbindung, die eine funktionelle Gruppe enthält, ii) einer funktionellen Oxysilangruppe und iii) einem bivalenten organischen Radikal, das die Kohlenstoff-Kohlenstoff-Doppelbindung, die eine funktionelle Gruppe enthält, und die funktionelle Oxysilangruppe verbindet, wobei das mindestens eine von einem Hydrolyse- und einem Kondensationsprodukt gebildet wird, indem das Oxysilan in Gegenwart einer organischen Säure und eines niederen Alkylalkohols mit 3 bis 9 Mol Wasser pro Mol hydrolysierbarer funktioneller Gruppe gebunden an das Silicium des Oxysilans in Kontakt gebracht wird.

2. Zusammensetzung mit geringem Brechungsindex nach Anspruch 1, wobei die Mehrzahl von Nanosilica-Teilchen eine Mehrzahl von festen Nanosilica-Teilchen umfasst, und wobei die Mehrzahl von festen Nanosilica-Teilchen mindestens 10 Vol.-% der Zusammensetzung mit geringem Brechungsindex umfasst.

3. Zusammensetzung mit geringem Brechungsindex nach Anspruch 1, wobei der Nanosilica-Verbund für mindestens 1 Stunde bei einer Temperatur von mindestens 25 °C vor der Bildung des Reaktionsprodukts gealtert wird.

4. Zusammensetzung mit geringem Brechungsindex nach Anspruch 1, wobei die organische Säure einen pKₛ-Wert in Wasser bei 25 °C von mindestens 4,7 aufweist.

5. Zusammensetzung mit geringem Brechungsindex nach Anspruch 1, wobei die Mehrzahl von Nanosilica-Teilchen eine Mehrzahl von festen Nanosilica-Teilchen umfasst, und wobei die Menge des Oxysilans, das zur Bildung des mindestens einen von einem Hydrolyse- und einem Kondensationsprodukt verwendet wird, und die Menge der Mehrzahl von festen Nanosilica-Teilchen 0,8 g bis 110 g des Oxysilans pro 100 g der Mehrzahl von festen Nanosilica-Teilchen betragen.

6. Zusammensetzung mit geringem Brechungsindex nach Anspruch 1, wobei die Mehrzahl von Nanosilica-Teilchen eine Mehrzahl von porösen Nanosilica-Teilchen umfasst, und wobei die Menge des Oxysilans, das zur Bildung des mindestens einen von einem Hydrolyse- und einem Kondensationsprodukt verwendet wird, und die Menge der Mehrzahl von porösen Nanosilica-Teilchen 0,8 g bis 120 g des Oxysilans pro 100 g der Mehrzahl von porösen Nanosilica-Teilchen betragen.

7. Gegenstand, umfassend ein Substrat mit einer abriebfesten antireflektiven Beschichtung, die nach Abrieb durch Verfahren 1, wie im Abschnitt "Verfahren" der Beschreibung offenbart, einen Kratzerprozensatz, wie bestimmt durch Verfahren 4, wie im Abschnitt "Verfahren" der Beschreibung offenbart, von 10 oder weniger aufweist, wobei die abriebfeste antireflektive Beschichtung ein Reaktionsprodukt aus Folgendem umfasst:
(i) einem Fluorelastomer mit mindestens einer Härtungsstelle;
(ii) einem multiolefinisches Vernetzungsmittel;
(iii) einem Radikalkettenpolymerisations-Initiator; und
(iv) einem Nanosilica-Verbund, umfassend:
(iv-a) eine Mehrzahl von festen Nanosilica-Teilchen, die mindestens 10 Vol.-% der abriebfesten antireflektiven Beschichtung umfassen und mindestens 50 %, aber weniger als 100 % von reaktionsfähigen Silanolen aufweisen, die mit einem reaktionsunfähigen Substituenten funktionalisiert sind; und
(iv-b) mindestens eines von einem Hydrolyse- und einem Kondensationsprodukt eines Oxysilans mit i) einer Kohlenstoff-Kohlenstoff-Doppelbindung, die eine funktionelle Gruppe enthält, ii) einer funktionellen Oxysilangruppe und iii) einem bivalenten organischen Radikal, das die Kohlenstoff-Kohlenstoff-Doppelbindung, die eine funktionelle Gruppe enthält, und die funktionelle Oxysilangruppe verbindet, wobei das mindestens eine von einem Hydrolyse- und einem Kondensationsprodukt gebildet wird, indem das Oxysilan in Gegenwart einer organischen Säure und eines niederen Alkylalkohols mit 3 bis 9 Mol Wasser pro Mol hydrolysierbarer funktioneller Gruppe gebunden an das Silicium des Oxysilans in Kontakt gebracht wird; und wobei der Nanosilica-Verbund für mindestens 1 Stunde bei einer Temperatur von mindestens 25 °C vor der Bildung des Reaktionsprodukts gealtert wird.

8. Gegenstand nach Anspruch 7, wobei die organische Säure einen pKₛ-Wert in Wasser bei 25 °C von mindestens 4,7 aufweist.

9. Gegenstand nach Anspruch 7, wobei die Menge des Oxysilans, das zur Bildung des mindestens einen von einem Hydrolyse- und einem Kondensationsprodukt verwendet wird, und die Menge der Mehrzahl von festen Nanosilica-Teilchen 0,8 g bis 110 g des Oxysilans pro 100 g der Mehrzahl von festen Nanosilica-Teilchen betragen.

10. Gegenstand nach Anspruch 7, wobei die Mehrzahl von festen Nanosilica-Teilchen ferner eine Mehrzahl von porösen Nanosilica-Teilchen umfasst, und wobei die Menge des Oxysilans, das zur Bildung des mindestens einen von einem Hydrolyse- und einem Kondensationsprodukt verwendet wird, und die Menge der Mehrzahl von porösen Nanosilica-Teilchen 0,8 g bis 120 g des Oxysilans pro 100 g der Mehrzahl von porösen Nanosilica-Teilchen beträgt.

11. Verfahren zur Bildung einer abriebfesten antireflektiven Beschichtung auf einem Substrat, wobei die abriebfeste antireflektive Beschichtung nach Abrieb durch Verfahren 1, wie im Abschnitt "Verfahren" der Beschreibung offenbart, eine Kratzerprozensatz, wie bestimmt durch Verfahren 4, wie im Abschnitt "Verfahren" der Beschreibung offenbart, von 10 oder weniger aufweist, umfassend:
(i) Kombinieren:
(i-a) von mindestens einem von einem Hydrolyse- und einem Kondensationsprodukt eines Oxysilans mit i) einer Kohlenstoff-Kohlenstoff-Doppelbindung, die eine funktionelle Gruppe enthält, ii) einer funktionellen Oxysilangruppe und iii) einem bivalenten organischen Radikal, das die Kohlenstoff-Kohlenstoff-Doppelbindung, die eine funktionelle Gruppe enthält, und die funktionelle Oxysilangruppe verbindet, wobei das mindestens eine von einem Hydrolyse- und einem Kondensationsprodukt gebildet wird, indem das Oxysilan in Gegenwart einer organischen Säure und eines niederen Alkylalkohols mit 3 bis 9 Mol Wasser pro Mol hydrolysierbarer funktioneller Gruppe gebunden an das Silicium des Oxysilans in Kontakt gebracht wird; und
(i-b) einer Mehrzahl von festen Nanosilica-Teilchen, um einen Nanosilica-Verbundvorläufer zu bilden, wobei die Mehrzahl von festen Nanosilica-Teilchen mindestens 10 Vol.-% der abriebfesten antireflektiven Beschichtung umfassen und mindestens 50 %, aber weniger als 100 % von reaktionsfähigen Silanolen aufweisen, die mit einem reaktionsunfähigen Substituenten funktionalisiert sind;
(ii) Altem des Nanosilica-Verbundvorläufers für mindestens 1 Stunde bei einer Temperatur von mindestens 25 °C, um einen Nanosilica-Verbund zu bilden;
(iii) Kombinieren des Nanosilica-Verbunds, eines Fluorelastomers mit mindestens einer Härtungsstelle, eines multiolefinischen Vernetzungsmittels und eines Radikalkettenpolymerisations-Initiators, um eine ungehärtete Zusammensetzung zu bilden;
(iv) Aufbringen einer Beschichtung der ungehärteten Zusammensetzung auf das Substrat, um eine Beschichtung aus der ungehärteten Zusammensetzung auf dem Substrat zu bilden; und
(v) Härten der Beschichtung aus der ungehärteten Zusammensetzung und Bilden dadurch der abriebfesten antireflektiven Beschichtung auf dem Substrat.

## Revendications

1. Composition à faible indice de réfraction comprenant un produit de réaction de :
(i) un fluoroélastomère ayant au moins un site de vulcanisation ;
(ii) un agent de réticulation multioléfinique ;
(iii) un initiateur de polymérisation radicalaire ;
(iv) un composite de nanosilice comprenant :
(iv-a) une pluralité de particules de nanosilice ayant au moins 50 % mais moins de 100 % de silanols réactifs fonctionnalisés avec un substituant non réactif, et
(iv-b) au moins l'un d'un produit d'hydrolyse et de condensation d'un oxysilane ayant i) un groupe fonctionnel contenant une double liaison carbone-carbone, ii) un groupe fonctionnel oxysilane, et iii) un radical organique divalent reliant le groupe fonctionnel contenant une double liaison carbone-carbone et le groupe fonctionnel oxysilane, ledit au moins l'un d'un produit d'hydrolyse et de condensation étant formé par mise en contact, en présence d'un acide organique et d'un alcool d'alkyle inférieur, dudit oxysilane avec de 3 à 9 moles d'eau par mole de groupe fonctionnel hydrolysable lié au silicium dudit oxysilane.

2. Composition à faible indice de réfraction de la revendication 1, dans laquelle ladite pluralité de particules de nanosilice comprend une pluralité de particules de nanosilice solides, et dans laquelle ladite pluralité de particules de nanosilice solides comprend au moins 10 % en volume de ladite composition à faible indice de réfraction.

3. Composition à faible indice de réfraction de la revendication 1, dans laquelle ledit composite de nanosilice est vieillie pendant au moins 1 heure à une température d'au moins 25 °C avant la formation dudit produit de réaction.

4. Composition à faible indice de réfraction de la revendication 1, dans laquelle ledit acide organique a un pKₐ dans l'eau à 25 °C d'au moins 4,7.

5. Composition à faible indice de réfraction de la revendication 1, dans laquelle ladite pluralité de particules de nanosilice comprend une pluralité de particules de nanosilice solides, et dans laquelle la quantité dudit oxysilane utilisé pour former ledit au moins l'un d'un produit d'hydrolyse et de condensation et la quantité de ladite pluralité de particules de nanosilice solides est de 0,8 g à 110 g dudit oxysilane par 100 g de ladite pluralité de particules de nanosilice solides.

6. Composition à faible indice de réfraction de la revendication 1, dans laquelle ladite pluralité de particules de nanosilice comprend une pluralité de particules de nanosilice poreuses, et dans laquelle la quantité dudit oxysilane utilisé pour former ledit au moins l'un d'un produit d'hydrolyse et de condensation et la quantité de ladite pluralité de particules de nanosilice poreuses est de 0,8 g à 120 g dudit oxysilane par 100 g de ladite pluralité de particules de nanosilice poreuses.

7. Article comprenant un substrat ayant un revêtement antireflet résistant à l'abrasion ayant un pourcentage de rayure de 10 ou moins tel que déterminé par le procédé 4 comme décrit dans la section « Procédés » de la description après abrasion par le procédé 1 comme décrit dans la section « Procédés » de la description, ledit revêtement antireflet résistant à l'abrasion comprenant un produit de réaction de :
(i) un fluoroélastomère ayant au moins un site de vulcanisation ;
(ii) un agent de réticulation multioléfinique ;
(iii) un initiateur de polymérisation radicalaire ; et
(iv) un composite de nanosilice comprenant :
(iv-a) une pluralité de particules de nanosilice solides comprenant au moins 10 pour cent en volume dudit revêtement antireflet résistant à l'abrasion et ayant au moins 50 % mais inférieur à 100 % de silanols réactifs fonctionnalisés avec un substituant non réactif ; et
(iv-b) au moins l'un d'un produit d'hydrolyse et de condensation d'un oxysilane ayant i) un groupe fonctionnel contenant une double liaison carbone-carbone, ii) un groupe fonctionnel oxysilane, et iii) un radical organique divalent reliant le groupe fonctionnel contenant une double liaison carbone-carbone et le groupe fonctionnel oxysilane, et ledit au moins un produit d'hydrolyse et de condensation étant formé par mise en contact, en présence d'un acide organique et d'un alcool d'alkyle inférieur, dudit oxysilane avec de 3 à 9 moles d'eau par mole de groupe fonctionnel hydrolysable lié au silicium dudit oxysilane ; et ledit composite de nanosilice étant vieilli pendant au moins 1 heure à une température d'au moins 25 °C avant la formation dudit produit de réaction.

8. Article de la revendication 7, dans lequel ledit acide organique a un pKₐ dans de l'eau à 25 °C d'au moins 4,7.

9. Article de la revendication 7, dans lequel la quantité dudit oxysilane utilisé pour former ledit au moins l'un d'un produit d'hydrolyse et de condensation et la quantité de ladite pluralité de particules de nanosilice solides est de 0,8 g à 110 g dudit oxysilane pour 100 g de ladite pluralité de particules de nanosilice solides.

10. Article de la revendication 7, dans lequel ladite pluralité de particules de nanosilice solides comprend en outre une pluralité de particules de nanosilice poreuses, et dans lequel la quantité dudit oxysilane utilisé pour former ledit au moins l'un d'un produit d'hydrolyse et de condensation et la quantité de ladite pluralité de particules de nanosilice poreuses est de 0,8 g à 120 g dudit oxysilane par 100 g de ladite pluralité de particules de nanosilice poreuses.

11. Procédé pour former un revêtement antireflet résistant à l'abrasion sur un substrat, ledit revêtement antireflet résistant à l'abrasion ayant un pourcentage de rayure de 10 ou moins tel que déterminé par le procédé 4 comme décrit dans la section « Procédés » de la description après abrasion par le procédé 1 comme décrit dans la section « Procédés » de la description, comprenant :
(i) la combinaison de :
(i-a) au moins l'un d'un produit d'hydrolyse et de condensation d'un oxysilane ayant i) un groupe fonctionnel contenant une double liaison carbone-carbone, ii) un groupe fonctionnel oxysilane, et iii) un radical organique divalent reliant le groupe fonctionnel contenant une double liaison carbone-carbone et le groupe fonctionnel oxysilane, ledit au moins un d'un produit d'hydrolyse et de condensation étant formé par mise en contact, en présence d'un acide organique et d'un alcool d'alkyle inférieur, dudit oxysilane avec de 3 à 9 moles d'eau par mole de groupe fonctionnel hydrolysable lié au silicium dudit oxysilane, et
(i-b) une pluralité de particules de nanosilice solides pour former un précurseur de composite de nanosilice, ladite pluralité de particules de nanosilice solides comprenant au moins 10 pour cent en volume dudit revêtement antireflet résistant à l'abrasion et ayant au moins 50 % mais moins de 100 % de silanols réactifs fonctionnalisés avec un substituant non réactif ;
(ii) le vieillissement dudit précurseur de composite de nanosilice pendant au moins 1 heure à une température d'au moins 25 °C pour former un composite de nanosilice ;
(iii) la combinaison dudit composite de nanosilice, un fluoroélastomère ayant au moins un site de vulcanisation, un agent de réticulation multioléfinique, et un initiateur de polymérisation radicalaire pour former une composition non vulcanisée ;
(iv) l'application d'un revêtement de ladite composition non vulcanisée sur ledit substrat pour former un revêtement de composition non durci sur ledit substrat ; et
(v) la vulcanisation dudit revêtement de composition non vulcanisée et ainsi la formation dudit revêtement antireflet résistant à l'abrasion sur ledit substrat.
